# NEUE EUROPÄISCHE PATENTSCHRIFT

(11) **EP 1 297 733 B2**
(45) Veröffentlichungstag und Bekanntmachung des Hinweises auf die Entscheidung über den Einspruch: **24.08.2011**
(45) Hinweis auf die Patenterteilung: 13.02.2008
(21) Anmeldenummer: 02020190.1
(22) Anmeldetag: 10.09.2002
(51) Int. Cl.: A01D 41/12

(54) **Verfahren und Vorrichtung zur Ermittlung einer Erntemaschineneinstellung**
Method and device for determining the adjustment of a harvester
Procédé et dispositif pour déterminer le réglage d'une machine de récolte

(30) Priorität: 27.09.2001 DE 10147733
(43) Veröffentlichungstag der Anmeldung: 02.04.2003
(73) Patentinhaber: CLAAS Selbstfahrende Erntemaschinen GmbH, 33428 Harsewinkel (DE)
(72) Erfinder: Behnke, Willi, 33803 Steinhagen (DE)

(56) Entgegenhaltungen:
- EP-A- 0 330 347
- DE-A- 19 705 841
- DE-A- 19 921 466
- DE-A- 19 922 436
- DE-A1- 3 810 723
- DE-A1- 4 205 272
- DE-A1- 4 311 054
- DE-A1- 19 506 059
- DE-C- 19 800 238
- US-A- 3 515 144
- US-A- 5 978 720
- Betriebsanleitung Mähdrescher 2254,2256,2258,2264 und 2266, John Deere Werke Zweibrücken, 1996, Seiten 20-13 bis 20-49 und 55-1 bis 55-21.

## Beschreibung

Die vorliegende Erfindung betrifft ein Verfahren entsprechend dem Oberbegriff des Anspruchs 1, und eine zugehörige Vorrichtung entsprechend dem Oberbegriff des Anspruchs 17 zur Ermittlung einer an den Ernteprozess angepassten Einstellung einer landwirtschaftlichen Erntemaschine, insbesondere Mähdrescher oder Feldhäcksler, mit wenigstens einem auf das Arbeitsergebnis einflussnehmenden Arbeitsaggregat, wobei zumindest ein Einstellparameter des Arbeitsaggregats variierbar ist.

Landwirtschaftliche Erntemaschinen sind zunehmend selbstfahrende Erntemaschinen und verfügen, zur Bearbeitung von verschiedenen Erntegütern, über ein oder mehrere einstellbare Arbeitsaggregate. Die unterschiedlichen bearbeitbaren Erntegüter erfordern, zur Erzielung eines guten Arbeitsergebnisses, dass die einzelnen Aggregate an die jeweiligen Ernteguteigenschaften beziehungsweise Erntegutarten angepasst eingestellt werden. Hierzu sind die einzelnen Aggregate mit manuell- oder aus der Fahrerkabine fernbedienbaren Stelleinrichtungen ausgestattet.

Derartige landwirtschaftliche Erntemaschine werden in der Regel von den Herstellern mit Einstellhilfen in Form von Handlisten ausgestattet, aus welchen der Bediener entnehmen kann, wie er die einzelnen Arbeitsaggregate der landwirtschaftlichen Erntemaschine entsprechend der zu erntenden Erntegutarten voreinstellen kann.
Einige Hersteller der landwirtschaftlichen Erntemaschinen bieten hierzu spezielle Schulungen für die Bediener an. In diesen Schulungen werden den Teilnehmern die Funktionsweisen und die einzelnen Einstellmöglichkeiten der landwirtschaftlichen Erntemaschine erklärt sowie weitere Hinweise zur Behebung von schlechten Arbeitsergebnissen gegeben. Beispielsweise werden die Ursachen für zu hohe Erntegutverluste an einem Mähdrescher aufgezeigt und mögliche Änderungen von Einstellparametern mit den jeweiligen Wirkungen auf den Erntegutverlust sowie auf das gesamte Arbeitsergebnis aufgezeigt.
Eine weitere Einstellhilfe für den Bediener der landwirtschaftlichen Erntemaschine ist die Beurteilung des Arbeitsergebnisses anhand des Gutes, welches vom Bearbeitungsfeld abtransportiert wird. Zerstörungen, Beimengungen, oder sonstige strukturelle Eigenschaften des geernteten Ernte- oder Häckselgutes können durch eine Sichtkontrolle erfasst werden und geben Aufschluß über die Arbeitsweise der Erntemaschine. Schulungen oder Erfahrungen versetzten den Bediener mehr oder weniger in die Lage, die Einstellungen der Erntemaschine so vorzunehmen, dass die Arbeitsergebnisse der Erntemaschine den Arbeitszielen entsprechend erreicht werden.
Mit dem Einzug von elektronischen Bedienterminals und Speichermitteln in landwirtschaftliche Erntemaschinen, ist es heute möglich, auf sogenannte Handlisten verzichten zu können. So ist es beispielsweise aus der DE 198 00 238 C1 bekannt, aus einer in einem Mähdrescher angeordneten Speichereinrichtung, unter der Eingabe einer Erntegutart und weiteren erntegutspezifischen Größen sowie mindestens einer Zielvorgabe für den geplanten Erntebetrieb, aus einer Vielzahl von gespeicherten Einstellparametern, wenigstens einen Einstellparameter für eine Einstellung eines Mähdreschers auswählen zu können. Werden von dem Bediener des Mähdreschers Änderungen der Erntebedingungen erkannt oder stellt er ein nicht zufriedenstellendes Arbeitsergebnis fest, so hat er die Möglichkeit, die Einstellparameter manuell zu verändern und diese Einstellung in der Speichereinrichtung für eine spätere erneute Verwendung zu hinterlegen. Es besteht für ihn ferner jederzeit die Möglichkeit, durch eine Ein-/ Vorgabe von neuen Auswahlkriterien, aus der Speichereinrichtung zumindest einen neuen, zuvor zugeordneten Einstellparameter abrufen zu können.
Die genannten Möglichkeiten zeigen Einstellhilfen in verschiedenen Formen auf. Der Bediener einer landwirtschaftlichen Erntemaschine kann jeweils manuell oder automatisiert auf Einstellparameter zugreifen, die zuvor empirisch oder anhand von Erfahrungen einzelner Bediener oder des Herstellers ermittelt und durch geeignete Mittel für eine spätere, erneute Verwendung gespeichert worden sind. Sollte jedoch die landwirtschaftliche Erntemaschine, das zugeordnete, erhoffte oder erwünschte Arbeitsergebnis im Arbeitsbetrieb nicht zeigen, so besteht für den Bediener der landwirtschaftlichen Erntemaschine lediglich die Möglichkeit, die einzelnen Einstellparameter per Hand erfahrungsgemäß zu verändern. Jedoch verfügen einige Bediener der landwirtschaftlichen Erntemaschinen, insbesondere zu Beginn der Ernte, nicht über die notwendigen Qualifikationen und entsprechenden Erfahrungen im Umgang mit der Erntemaschine und insbesondere mit den unterschiedlichen Erntebedingungen, so dass in vielen Fällen die erforderliche manuelle Anpassung der landwirtschaftlichen Erntemaschinen an die Erntebedingungen nicht oder nicht richtig vorgenommen wird und vorhandene Ernteleistung ungenutzt bleibt, schlechte Arbeitsergebnisse erzielt oder sogar unnötige Ernteverluste erzeugt werden.
Um nun eine völlige Unabhängigkeit der Einstellung der Erntemaschine von der Bedienerqualifikation zu erreichen, sind aus dem Stand der Technik verschiedene Steuerungen beziehungsweise automatische Regelungen an landwirtschaftlichen Erntemaschinen entnehmbar. Beispielsweise wird in der DE 197 05 841 A1 ein Verfahren an einem Mähdrescher vorgeschlagen, welches vorsieht, die Einstellung eines Verarbeitungsschrittes in Abhängigkeit des Ergebnisses des jeweiligen oder des vorherigen Verarbeitungsschrittes zu regeln. Es ist unter hierbei anderem vorgesehen, die Reinigungsgebläsedrehzahl in Abhängigkeit der Bergauf- oder Bergabfahrt zu steuern und weiterhin auch die Fahrgeschwindigkeit auf diese Drehzahl Einfluss nehmen zu lassen. Ferner wird eine Regelung der Fahrgeschwindigkeit des Mähdreschers in Abhängigkeit der Ernteverluste beziehungsweise der Überkehrbelastung vorgeschlagen. Generell erfordert eine automatische Steuerung die Kenntnis der Zusammenhänge sowie eine automatische Regelung zusätzlich die Kenntnis der Regelstrecke. Für eine zufriedenstellende Funktion derselben, ist ferner eine Erfassung des jeweiligen Soll- und Istwertes Voraussetzung. Die Tatsache, dass sich die Zusammenhänge in einem Mähdrescher nur teilweise mathematisch beschreiben sowie nur einige Prozessgrößen erfassen lassen, hat zur Folge, dass die vorgeschlagenen Steuerungen beziehungsweise Regelungen nur unter bestimmten Arbeitsbedingungen eine verbesserte Einstellung des Mähdreschers bewirken sowie eine Entlastung der Bediener erbringen. In manchen Fällen bewirken diese Einrichtungen völlig falsche Einstellungen der Arbeitsaggregate und führen zu ungenügenden Arbeitsergebnissen der Erntemaschine.

Der vorliegenden Erfindung liegt daher die Aufgabe zugrunde, die aufgezeigten Mängel des Standes der Technik vor allem dadurch zu beseitigen, dass dem Bediener einer landwirtschaftlichen Erntemaschine ein Mittel an die Hand geben wird, welches ihm die Möglichkeit einräumt, gegenüber einer ersten Einstellparametervorgabe eine an die momentanen Arbeitsbedingungen angepasste, verbesserte Einstellung für zumindest ein Arbeitsaggregat zu finden.

Die Lösung der Aufgabe wird durch ein Verfahren gegeben, welches dadurch gekennzeichnet ist, dass
- die landwirtschaftliche Erntemaschine im Arbeitseinsatz mit einer annähernd gleichbleibenden Erntegutmenge beaufschlagt wird,
- wenigstens ein annähernd gleichbleibendes Arbeitsergebnis abgewartet und dieses aufgezeichnet wird,
- ein Einstellparameter eines einstellbaren Arbeitsaggregates verändert und erneut wenigstens ein annähernd gleichbleibendes Arbeitsergebnis der landwirtschaftlichen Erntemaschine im Arbeitsbetrieb abgewartet wird,
- anhand der Arbeitsergebnisse, ein Einstellparameter für das Arbeitsaggregat ausgewählt wird, welcher zu dem besseren Arbeitsergebnis der landwirtschaftlichen Erntemaschine geführt hat, und
- die Beaufschlagung der landwirtschaftlichen Erntemaschine mit einer annähernd gleichbleibenden Erntegutmenge, durch zumindest eine Einrichtung ermittelt und die Einhaltung zumindest dem Bediener durch geeignete Mittel angezeigt wird.

Erfindungsgemäß wird durch dieses Verfahren der Einfluss eines Einstellparameters wenigstens eines Arbeitsaggregates der Erntemaschine in den momentan herrschenden Arbeitsbedingungen auf wenigstens ein Arbeitsergebnis ermittelt. Durch das Ergebnis dieses Verfahrens erkennt auch ein ungeübter Bediener vorteilhaft recht schnell, ob überhaupt, wann und inwieweit der variierte Einstellparameter einen Einfluss auf das Arbeitsergebnis hat. So lässt sich das erfindungsgemäße Verfahren beliebig oft und auch mit unterschiedlichen Einstellungen von dem Bediener wiederholen. Er erhält erfindungsgemäß prinzipielle Kenntnisse über die momentan herrschenden Erntebedingungen und über die Einflüsse der Einstellparameter der Arbeitsaggregate auf das Arbeitsergebnis.

In einer ersten Weiterbildung der Erfindung, wird die Vorgabe wenigstens eines Einstellparameters für das wenigstens eine Arbeitsaggregat, für ein erstes Arbeitsergebnis der landwirtschaftlichen Erntemaschine aus einer Speichereinrichtung in Abhängigkeit von zumindest einer Ernteguteigenschaft und/oder zumindest einer erntegutspezifischen Größe auswählbar bereit gehalten. Das erfindungsgemäße Verfahren lässt sich einfach in schon vorhandene Einrichtung einer landwirtschaftlichen Erntemaschine integrieren. Durch beispielsweise die Eingabe zumindest einer Ernteguteigenschaft und weiteren Größen kann zumindest ein erster Einstellparameter aus einer Speichereinrichtung abgerufen werden, der erfahrungsgemäß zunächst ein ausreichendes Arbeitsergebnis erwarten lässt. In den wenigsten Fällen genügt jedoch diese Einstellung den Anforderungen der gewünschten Arbeitsergebnisse, wie Erntegutsauberkeit und Verlusthöhe. Im Besonderen wird dies durch neue Erntegutsorten und besondere Erntebedingungen, wie Reife, Erntewetter oder/und den Erntemaschinenzustand, wie Alter, Verschleiß und/oder Ausrüstung hervorgerufen. Anhand des erfindungsgemäßen Verfahrens lassen sich neue Einstellparameter ermitteln und in der Speichereinrichtung hinterlegen. Die Speichereinrichtung kann ferner zur Aufzeichnung der Arbeitsergebnisse dienen.
In einer weiteren Ausgestaltung der Erfindung ist es vorgesehen, dass der variierte Einstellparameter des Arbeitsaggregates in Verbindung mit dem Arbeitsergebnis aufgezeichnet wird. Hierdurch erhält der Bediener vorteilhaft die Möglichkeit, bei der Ermittlung von mehreren Arbeitsergebnissen, den jeweiligen Einstellparameter dem entsprechenden Arbeitsergebnis nachhaltig zugeordnet abrufen zu können.

In einer Weiterbildung der Erfindung, wird die Erntegutmenge, mit der die landwirtschaftliche Erntemaschine beaufschlagt wird und/oder wenigstens ein Arbeitsergebnis der landwirtschaftlichen Erntemaschine, durch zumindest einen Sensor erfasst und dem Bediener der landwirtschaftlichen Erntemaschine jeweils in der Fahrerkabine zur Überwachung angezeigt. Durch jeweilige Sensoren erhält der Bediener vorteilhaft die Möglichkeit in der Fahrerkabine der Erntemaschine die Erntegutmenge und/oder wenigstens ein Arbeitsergebnis angezeigt zu bekommen. Beispielsweise wird die Erntegutmenge durch eine Einrichtung ermittelt, welche die Auslenkung der Einzugskette in einem Einzugskanal sensiert.

Erfindungsgemäß kann auch das Vorliegen eines annähernd gleichbleibenden Arbeitsergebnisses der landwirtschaftlichen Erntemaschine, zumindest eines Arbeitsergebnisses, durch zumindest eine Einrichtung ermittelt und dessen Einhaltung zumindest dem Bediener durch geeignet Mittel angezeigt werden. Die Einhaltung der Verfahrensbedingung wird vorteilhaft jederzeit gleich bewertet und stellt eine weitere Entlastung des Bedieners der Erntemaschine dar. Es wird dem Bediener der landwirtschaftlichen Erntemaschine ferner vorteilhaft ein Hilfsmittel an die Hand gegeben, durch welches er die Ermittlung eines verbesserten Einstellparameters beschleunigt durchführen kann. Wird die Einhaltung der annähernd gleichbleibenden Erntegutmenge von der erfindungsgemäßen Einrichtung ermittelt und angezeigt, kann der Bediener mit der Durchführung des nächsten Verfahrensschrittes beginnen. Die Einhaltung der annähernd gleichbleibenden Erntegutmenge durch die Erntemaschine kann vorteilhaft jederzeit erfindungsgemäß durch eine einfache Anzeige überwacht werden.

In einer weiteren Ausgestaltung der Erfindung wird in der jeweiligen Einrichtung, die Beaufschlagung der landwirtschaftlichen Erntemaschine mit einer annähernd gleichbleibenden Erntegutmenge und/oder das Vorliegen zumindest eines annähernd gleichbleibenden Arbeitsergebnisses anhand eines jeweils vorgegebenen Toleranzbandes sowie einer vorgegebenen Zeitspanne ermittelt. Vorteilhaft entstehen durch diese Vorgaben eine einstellbare Vorgabe zur Ermittlung der "annähernd gleichbleibenden" Verfahrensbedingung. Mittels der Anzeige- und Bedieneinrichtung, besteht weiter vorteilhaft die Möglichkeit das Toleranzband relativ zum momentanen Sensorwert anzuzeigen. Der Bediener kann dann abschätzen, in welchem Bereich das Arbeitsergebnis oder die Erntegutmenge schwankt und dann vorteilhaft Maßnahmen zur Einhaltung oder Erreichung der "annähernd gleichbleibenden" Bedingung ergreifen. Auch eine gleichzeitige Anzeige der Zeit, in welcher sich der Sensorwert am Stück innerhalb des Toleranzbandes befunden hat, kann ein weiterer angezeigter Wert sein. Eine veränderbare Vorgabe des Toleranzbandes sowie der Zeitspanne, in Abhängigkeit von der gewählten Erntegutart und/oder des jeweils gewählten Einstellparameters und/oder einer Erntezielvorgabe, ist weiterhin denkbar.

In einer weiteren Ausgestaltung der Erfindung, wird erfindungsgemäß in einer Einrichtung, nach dem Vorliegen und der Aufzeichnung eines erstens Arbeitsergebnisses der landwirtschaftlichen Erntemaschine, wenigstens ein Einstellparameter des einzustellenden Arbeitsaggregates automatisch verändert, erneut ein annähernd gleichbleibendes Arbeitsergebnis abwartet und das sich einstellende, neue Arbeitsergebnis als ein weiteres Arbeitsergebnis aufgezeichnet. Hierdurch wird vorteilhaft eine weitere Verringerung der Verfahrenszeit und der Abhängigkeit von dem Bediener der landwirtschaftlichen Erntemaschine erreicht. Die automatisierte Veränderung des Einstellparameters erfolgt hierbei stets nach gleichen Vorgaben.

In einer besonderen Weiterbildung der Erfindung, wird der Einstellparameter automatisch nach einer vorgegebenen Anzahl, Größe und Richtung in Abhängigkeit des einzustellenden Arbeitsaggregates verändert. Hierdurch werden vorteilhaft die veränderten Einstellungen jeweils an den Einstellparameter angepasst und gezielte in Verbindung mit dem einzustellenden Aggregat, variiert.

Der Bediener der landwirtschaftlichen Erntemaschine bestimmt, wie häufig und in welchem Umfang er eine Ermittlung der Einstellung eines Einstellparameters nach dem erfindungsgemäßen Verfahren bestimmt. In einer weiteren Ausbildung des erfindungsgemäßen Verfahrens, wird anhand der aufgezeichneten Arbeitsergebnisse ein variierter Einstellparameter für das Arbeitsaggregat automatisch ausgewählt. Dabei werden in einer Einrichtung nach dem beschriebenen Verfahren zumindest zwei Arbeitsergebnisse vergleichend gehalten und anhand von hinterlegten Kriterien automatisch der Einstellparameter ausgewählt, der zu dem besseren Arbeitsergebnis geführt hat. Ein oder mehrere Kriterien können durch die Erntegutart und/oder durch wenigstens eine Zielvorgabe manuell oder automatisch vorgegeben und entsprechend ausgewählt werden. Dies erbringt den Vorteil, dass eine weitere Vereinfachung bei der Durchführung des Verfahrens und eine weitere Erhöhung der Bedienerunabhängigkeit erzielt wird. Die Beurteilung der Arbeitsergebnisse wird vorteilhaft vollständig automatisiert und vom Bediener unabhängig durchgeführt. Der Einstellparameter zur Erzielung eines besseren Arbeitsergebnisses der landwirtschaftlichen Erntemaschine wird dann dem Bediener automatisch vorgeschlagen.

Eine weitere Verbesserung des erfindungsgemäßen Verfahrens, wird durch eine weitere Ausgestaltung der Erfindung erreicht, indem anhand der aufgezeichneten Arbeitsergebnisse, eine Beziehung zwischen den variierten Einstellparametern und den erzielten Arbeitsergebnissen ermittelt und anhand dieser Beziehung ein Einstellparameter ausgewählt wird, der anhand dieser Beziehung zu dem besten Arbeitsergebnis führt. Liegen nun mehrere erfindungsgemäß ermittelte Arbeitsergebnisse in Verbindung mit einem Einstellparameter vor. So lässt sich in der Regel eine Beziehung zwischen dem Einstellparameter und dem Arbeitsergebnis ermitteln. Diese Beziehung kann zumindest teilweise/ bereichsweise als ein mathematische Beziehung beschrieben werden. Die einzelnen aufgezeichneten Arbeitsergebnisse, sowie eine mathematische Beziehung hierzu, kann zur weiteren Auswertung auf einer Bedieneranzeige graphisch dargestellt werden. Durch eine manuelle Auswahl oder eine weitere mathematische Bearbeitung, beispielsweise durch die Ermittlung von Extrem- oder Wendepunkten, kann vorteilhaft ein zu einem verbesserten Arbeitsergebnis führender Einstellparameter ausgewählt und/ oder berechnet werden.

Das erfindungsgemäße Verfahren lässt sich in einer weiteren Ausgestaltung der Erfindung weiter verbessern, indem mehrere Einstellparameter eines einstellbaren Arbeitsaggregates gleichzeitig verändert werden und erneut ein annähernd gleichbleibendes Arbeitsergebnis der landwirtschaftlichen Erntemaschine im Arbeitsbetrieb abgewartet wird. Der Einfluss auf ein Arbeitsergebnis lässt sich hierdurch vorteilhaft in einigen Verfahrensabläufen weiter verstärken. So sind beispielsweise an einer Reinigungseinrichtung eines Mähdreschers, der Einfluss der Reinigungsgebläsedrehzahl und der Obersieböffnungsweite auf die Erntegutsauberkeit zumindest erfahrungsgemäß bekannt. Eine gegenläufige Verstellung der Einstellparameter verstärkt den Einfluss auf die Erntegutsauberkeit. Erfindungsgemäß kann durch eine gleichzeitige Verstellung vorteilhaft eine schnellere Annäherung der Einstellung an ein gewünschtes Arbeitsergebnis erreicht werden.

In einer Weiterbildung der Erfindung, wird erfindungsgemäß die Ermittlung einer verbesserten Einstellung, wenigstens eines einstellbaren Arbeitsaggregates, automatisch gesteuert und der ermittelte Einstellparameter dem Bediener der landwirtschaftlichen Erntemaschine angezeigt und/oder das Arbeitsaggregat automatisch nach diesem Einstellparameter eingestellt. Hierdurch wird letztendlich eine völlige Bedienerunabhängigkeit des erfindungsgemäßen Verfahrens erreicht. Der Bediener hat nur noch darauf zu achten, dass die Erntemaschine während der automatischen Ermittlung eines Einstellparameters, mit einer annähernd gleichbleibenden Erntegutmenge beaufschlagt wird. Es ist aber auch denkbar, dass eine gleichbleibende Erntegutmenge durch die Erntemaschine, durch bekannte Einzugsteuer-, Spurführungs- und/oder Vorfahrtregelsysteme an landwirtschaftlichen Erntemaschinen gezielt gesteuert und weitgehend automatisiert eingehalten werden kann.

In einer weiteren Ausgestaltung der Erfindung ist es vorgesehen, dass mehrere Einstellparameter eines Arbeitsaggregates und/oder die Einstellparameter mehrerer Arbeitsaggregate in einer bestimmten Reihenfolge nacheinander ermittelt werden. Erfindungsgemäß ist es vorgesehen, dass unterschiedliche Einstellparameter anhand des beschriebenen Verfahrens ermittelt werden. Dabei hat es sich als besonders vorteilhaft erwiesen, nach einer bestimmten Reihenfolge vorzugehen. Diese Reihenfolge wird durch die jeweilige Erntemaschine und den gewählten Arbeitsbetrieb bestimmt. Vielfach ergibt es sich, dass die Ermittlung eines ersten Einstellparameters, nach erfolgter Einstellung weiterer Einstellparameter, erneut zu einem schlechteren Arbeitsergebnissen führt. Vorteilhaft wird daher die Ermittlung von Einstellparameter nach dem erfindungsgemäßen Verfahren für das mit dem Erntegut zuerst in Kontakt kommende Arbeitsaggregate auch zuerst und danach die Einstellparameter für die nachfolgenden Arbeitsaggregate ermittelt. Dies lässt sich im besonderen am Beispiel eines Mähdreschers erläutern. Die Einstellungen der Dreschaggregate, wie Dreschtrommeldrehzahl und Dreschkorbweite beeinflussen die der Reinigungseinrichtung zugeführten Gutzusammensetzung und somit auch die Arbeitsweise der Reinigungseinrichtung. Daher ist es erfindungsgemäß besonders vorteilhaft, zuerst die Einstellparameter der Dreschaggregate nach dem erfindungsgemäßen Verfahren zu finden, einzustellen und dann anschließend die Einstellparameter der Reinigungseinrichtung erfindungsgemäß zu ermitteln.

In einer besonderen Ausgestaltung der Erfindung werden die Einstellparameter eines Mähdreschers, wie wenigstens eine Dreschkorbweite oder Dreschtrommeldrehzahl der Dreschaggregate, nach dem erfindungsgemäßen Verfahren ermittelt, wobei die Dreschkorbweite und/oder die Dreschtrommeldrehzahl für das Dreschaggregat anhand des spezifischen Gewicht des Erntegutes und/oder der Ertragsmenge ausgewählt wird. Bei der Auswahl wird ferner berücksichtigt, ob die Verlustsignale, die Überkehrmenge und/oder die Überkehrkornmenge in dem Mähdrescher in Verbindung mit dem ausgewählten Einstellparameter, der Dreschtrommeldrehzahl oder der Dreschkorbweite, unterhalb einer festgelegten, jeweiligen Grenze gelegen haben. Zur. Auswahl des Einstellparameters für das Dreschaggregat, wird zunächst der höchste ermittelte Wert für das spezifische Gewicht und/oder der Ertragsmenge gesucht und anschließend nachgeschaut, ob die Verluste und/ oder die Überkehrparameter innerhalb von vorgegeben Grenzen liegen. Sollte dies nicht der Fall sein, kann der nächste, tiefere Wert ausgewählt werden. Es erscheint jedoch manchmal als besonders vorteilhaft, zunächst den Einstellparameter, der zu den Arbeitsergebnissen mit dem zughörigen höchsten spezifischen Gewicht und/oder der höchsten Ertragsmenge gehört, ohne Berücksichtigung der Verluste oder der Überkehrparameter, auszuwählen und einzustellen. Oftmals erbringt dann die anschließende erfindungsgemäße Ermittlung von Einstellparameter für die Reinigungseinrichtung und deren Einstellung, die Unterschreitung der erforderlichen Grenzen für die Arbeitsergebnisse der Reinigungseinrichtung, wie Verluste, Überkehrmenge und Überkehrkornmenge.

In einer weiteren vorteilhaften Ausgestaltung der Erfindung, wird das erfindungsgemäße Verfahren zur Ermittlung von Einstellparametern für eine Reinigungseinrichtung an einem Mähdrescher verwendet. Dabei wird der jeweilige Einstellparameter für die Reinigungsgebläsedrehzahl, die Obersiebweite und/oder die Untersiebweite ausgewählt und eingestellt, der zu der geringsten Überkehrmenge geführt hat. Dabei können auch die weiteren Arbeitsergebnisse der Reinigungseinrichtung, wie die Verluste und die Überkehrkornmenge, durch eine mögliche Unterschreitung einer jeweiligen, vorgegebenen Grenze Berücksichtigung finden. So dass es durchaus sein kann, dass nicht der geringste Wert für die Überkehrmenge, sondern ein höherer Wert ausgewählt und der zugehörige Einstellparameter eingestellt wird, um die Vorgaben von Grenzewerten erfüllen zu können. Die allgemein Vorgabe der Grenzwerte richtet sich nach den Zielvorgaben, mit welchen der Mähdrescher betrieben oder die Ernte durchgeführt werden soll.

Weitere vorteilhafte Ausgestaltungen und Weiterbildungen der Erfindung sind Gegenstände der weiteren Unteransprüche.

Anhand der nachfolgenden Zeichnungen wird die Erfindung näher erläutert.
Es zeigen:
- Figur 1: eine landwirtschaftliche Erntemaschine in Form einer schematisierten Seitenansicht eines Mähdrescher,
- Figur 2: ein Flussdiagramm, nachdem das erfindungsgemäße Verfahren arbeitet und
- Figur 3: einen Aufbau der erfindungsgemäßen Vorrichtung in einem Mähdrescher.

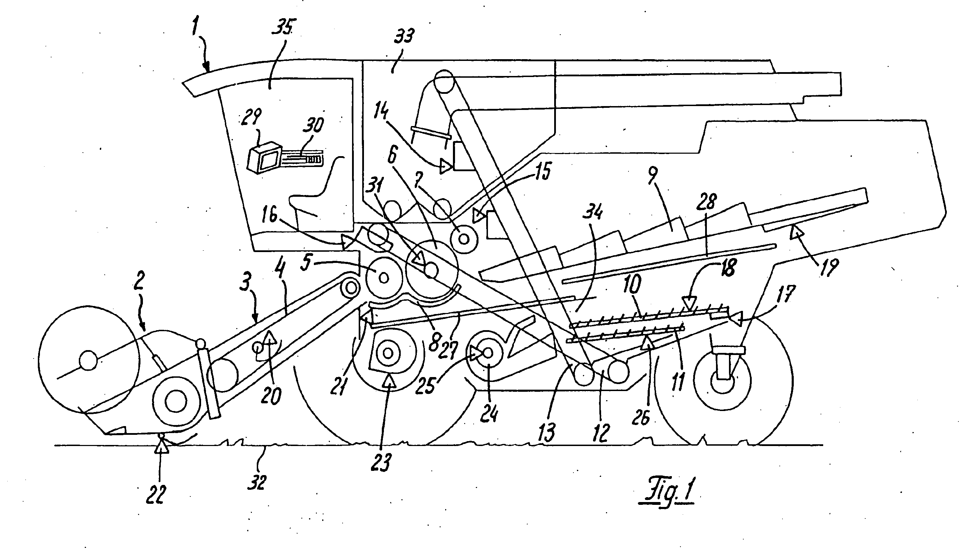

In der Figur 1 wird ein schematisierte Seitenansicht eines Mähdreschers 1 gezeigt. Aufgabe eines Mähdreschers 1 ist es, auf Halmen wachsendes Erntegut von einer Bearbeitungsfläche 32 aufzunehmen und von dem Stroh und weiteren Beimengungen zu trennen. Zur Aufnahmen des Erntegutes ist in der Figur 1 beispielsweise ein Getreideschneidwerk 2 dargestellt. Dieses schneidet die Ernteguthalme mit dem in den Ähren befindlichen Erntegut vom Bearbeitungsfeld 32 ab und führt es anschließend auf die Breite des Einzugs 3 zusammen. In dem Schrägförderer 3 befinden sich umlaufende Einzugsketten 4 mit Querstegen, die das Erntegut der nachgeordneten Dreschaggregaten 5,6 zuführen. Das Erntegut wird von der Vorbeschleunigertrommel 5 am Ende des Schrägförderers 3 abgenommen und entlang des Umfangs der Vorbeschleunigertrommel 5 zwischen der Vorbeschleunigertrommel 5 und dem Dreschkorb 8 beschleunigt. Das beschleunigte Erntegut wird dann an die Dreschtrommel 6 übergeben und weiter beschleunigt. Durch die schlagende und reibende Wirkung der Vorbeschleunigertrommel 5 sowie der Dreschtrommel 6 und die auf das Erntegut wirkende Zentrifugalkraft, wird das Erntegut aus den Ähren und vom Stroh getrennt und gelangt dann durch den für das Erntegut durchlässigen Dreschkorb 8 auf den Vorbereitungsboden 27. Das von der Dreschtrommel 6 abgegebene Stroh, wird durch die Wendetrommel 7 abgebremst und auf mehrere über die Arbeitsbreite nebeneinander angeordnete Schüttler 9 umgelenkt. Die Schwingbewegung der Schüttler 9 sowie deren stufenförmigen Ausbildung bewirken eine Förderung des Strohs zum hinteren Ende des Mähdreschers hin sowie eine Abscheidung des noch im Stroh befindlichen Erntegutes. Diese Restmenge wird durch den Rücklaufboden 28 und einer Schwingbewegung des selben ebenfalls auf den Vorbereitungsboden 27 übergeben. Das auf dem Vorbereitungsboden 27 befindliche Erntegut mit den weiteren Beimengungen, wie Strohstücke, Spreu und Ährenteile, wird durch eine Schwingbewegung des selben und dessen stufenförmigen Ausbildung separiert und den nachfolgenden Reinigungsaggregaten 10,11,24 zugeführt. Die Übergabe erfolgt über eine von dem Reinigungsgebläse 24 belüftetet Fallstufe 34 auf das Obersieb 10. Dieses sowie das darunter befindliche Untersieb 11 sind in der Regel Lamellensiebe mit jeweils separat einstellbaren Öffnungsweiten, wobei das Obersieb10 im hinteren Bereich mit einer von der restlichen Öffnungsweite des Obersiebs 10 unterschiedlichen Öffnungsweite eingestellt werden kann. Das Unter- sowie das Obersieb 10,11 werden von einem von dem Reinigungsgebläse 24 erzeugten Luftstrom durchsetzt. Die Schwingbewegung der Siebe 10,11 sowie der Luftstrom bewirken eine Förderung des Erntegutes sowie deren Beimengungen zum hinteren Ende der Erntemaschine hin. Durch die Fallstufe 34 werden große und leichte Beimengungen von dem Luftstrom, bevor sie das Obersieb 10 erreichen, erfasst und aus dem Mähdrescher 1 abgeschieden. Kleinere und schwerere Erntegutbestandteile gelangen von dem Vorbereitungsboden 27 über die Fallstufe 34 auf das Obersieb 10. Je nach Einstellung der Obersiebweite, fallen die einzelnen Erntegutkörner und weitere Bestandteile des Erntegutes durch dieses hindurch und gelangen so auf das Untersieb 11. Stroh und nicht ausgedroschene Ähren werden über den vorderen Siebbereich hinweg bewegt und fallen im hinteren Bereich des Obersiebes 10 durch das Obersieb 10 direkt in die sogenannte Überkehr. Das Untersieb 11 besitzt in der Regel eine feinere Sieblamellenstuktur als das Obersieb 10 und wird normalerweise mit einer geringeren Öffnungsweite als das Obersieb 10 eingestellt. Größere und leichte Erntegutbestandteile, wie Erntegutkörner mit Spelz, Ährenteile oder Halmteile werden, sofern sie durch das Obersieb 10 auf das Untersieb 11 gelangt sind, durch die Schwingbewegung und den Luftstrom in die sogenannte Überkehr übergeben. Das gereinigte Erntegut selbst fällt direkt durch das Untersieb 11 hindurch und wird mittels einer Zuführschnecke und dem Kornelevator 13 in den Korntank 33 gefördert. Das in die Überkehr gelangte Erntegut wird mittels einer Zuführschnecke und dem Überkehrelevator 12 oberhalb der Vorbeschleunigertrommel 5 erneut dem Dreschprozess zugeführt.
Der Mähdrescher 1 ist mit einer Fahrerkabine 35 ausgestattet, in welcher eine Steuerund Monitoreinrichtung 29 sowie eine Bedien- und Anzeigeeinrichtung 30 angeordnet sind. Femer sind dort nicht näher dargestellte, dem Fachmann bekannte Einrichtung zur Vorgabe der Fahrtrichtung und Fahrgeschwindigkeit des Mähdreschers 1 vorhanden. Die Steuer- und Monitoreinrichtung 29 sowie die Anzeige- und Bedieneinrichtung 30 stehen mit in dem Mähdrescher 1 an verschiedenen Orten angeordneten einzelnen Sensoren und Aktoren in Verbindung. Der Bediener des Mähdreschers 1 erhält hierdurch die Möglichkeit, die Funktionsweise des Mähdreschers 1 einstellen und überwachen zu können. In der Figur 1 werden durch Pfeilspitzen die einzelnen Stellen in dem Mähdrescher 1 angedeutet, an welchen ein Sensor zur Ermittlung von Prozess- und Einstellparameter angeordnet ist. Die jeweiligen Aktoren zur Einstellung des Mähdreschers 1 sind dem Fachmann ausreichend bekannt, so dass in dieser Figur 1 auf die Darstellung des jeweiligen Elementes verzichtet werden kann.
Dem Schneidwerk 2 ist eine Schnitthöhen- Messeinrichtung 22 zugeordnet. Diese Einrichtung 22 dient der Ermittlung des tatsächlichen Abstandes zwischen dem Schneidwerk 2 und der Bearbeitungsfläche 32. Der sensierte Wert kann mittels der Monitoreinrichtung 29 oder der Anzeigeeinrichtung 30 dem Bediener angezeigt und ferner als Istwert für eine automatische Schnitthöhenregelung verwendet werden. Zur Erfassung der Erntemenge M ist in dem Schrägförderer 3 eine Erntemengenmesseinrichtung 20 angebracht. Diese ermittelt die von der Erntemenge M abhängige Auslenkung einer Einzugskette 4. Eine weitere Sensorik ist an dem Dreschkorb 8 angeordnet. Diese Dreschkorbweiten- Messeinrichtung 21 ist einfach oder mehrfach ausgebildet und ermittelt den Abstand zwischen der Vorbeschleunigertrommel 5 und dem Dreschkorb 8 und/oder der Dreschtrommel 5 und dem Dreschkorb 8 an einer oder mehreren Stellen.
Die Vorbeschleunigertrommel 5, die Dreschtrommel 6 und die Wendetrommel 7 werden in der Regel von einem gemeinsamen Antrieb angetrieben, wobei die Drehzahlen der Trommeln 5,6,7 über einen Stellantrieb variiert werden kann. Diesen Trommeln 5,6,7 ist eine Dreschtrommeldrehzahl- Messeinrichtung 31 zur Erfassung zumindest einer der Trommeldrehzahlen zugeordnet. Zur Erzeugung unterschiedlicher Luftströme durch die Reinigungseinrichtung ist der Antrieb des Reinigungsgebläses 24 drehzahlvariabel ausgeführt. Die tatsächliche Drehzahl des Reinigungsgebläses 24 wird mittels einer Reinigungsgebläse- Messeinrichtung 25 erfasst. Der Reinigungseinrichtung können weitere Sensoren zugeordnet sein. So lässt sich auch die jeweilige Sieböffnungsweite durch eine Obersieb- Weitenmesseinrichtung 18 und eine Untersieb- Weitenmesseinrichtung 26 erfassen. Diese Messeinrichtungen 18,26 können Teil der jeweiligen nicht dargestellten Einstelleinrichtung oder separat ausgeführt und jeweils am Sieb 10,11 angeordnet sein. Am hinteren Ende des Obersiebes 10 ist eine Obersieb-Verlustmesseinrichtung 17 angeordnet. Hiermit lassen sich anteilig die Erntegutkörner erfassen, die über die Reinigungseinrichtung hinweg den Mähdrescher 1 verlassen und als Verluste verloren gehen. Derartige Sensoren sind dem Fachmann bekannt und erstrecken sich teilweise oder komplett über die Arbeitsbreite der Reinigungseinrichtung. Sie sind normalerweise als Prallplatte oder -rohr ausgebildet und werten die Schwingungen aus, die durch Aufprall von Erntegutkörner auf die Platte oder Röhre erzeugt werden. Diese Sensortechnik kann ferner an jeder beliebigen Stelle in einem Mähdrescher 1 eingesetzt und angeordnet werden. Hierdurch lassen sich dann Erntegutkörnerströme erfassen und ermöglichen zumindest eine vergleichende und relative Aussage über die am Einsatzort herrschenden Körnermengen. So wird diese Sensortechnik auch in den Schüttlern 9 zur Erfassung der Abscheidung eingesetzt. Um eine Aussage über die noch im Stroh befindlichen Resterntegutkörner zu erhalten, ist zumindest am hinteren Ende eines Schüttlers 9 ein Schüttler- Verlustsensor 19 befestigt. Dieser Sensor 19 erfasst anteilig die noch am Ende des Schüttlers 9 abgeschiedene Resterntegutkömer. Auch zur Beurteilung der Erntegutkörnermenge in der Überkehr lässt sich eine solche Prallplatten- Sensorik am Ende des Untersiebes 11 oder an der Stelle der Rückführung der Überkehr in den Dreschprozess anordnen.
Zur Beurteilung der in der Überkehr befindlichen Erntegutbestandteile ist eine Überkehrmesseinrichtung 16 am oberen Ende des Überkehrelevators 12 angeordnet. Hiermit lassen sich das Überkehrvolumen, der Korn- und der Bruchkornanteil bestimmen. Bekannt sind hierfür optische Lichtschranken, optische Sensoren oder Durchleuchtungssensoren (NIR- Sensoren). Der Kornelevator 13 ist mit weiteren Sensoren 14,15 ausgestattet, welche die Ermittlung der Fördermenge durch ein Ertragsmesssystem 14 sowie die Ermittlung des spezifischen Gewichtes des Erntegutes durch eine Kalibrierwaage 15 erlauben.

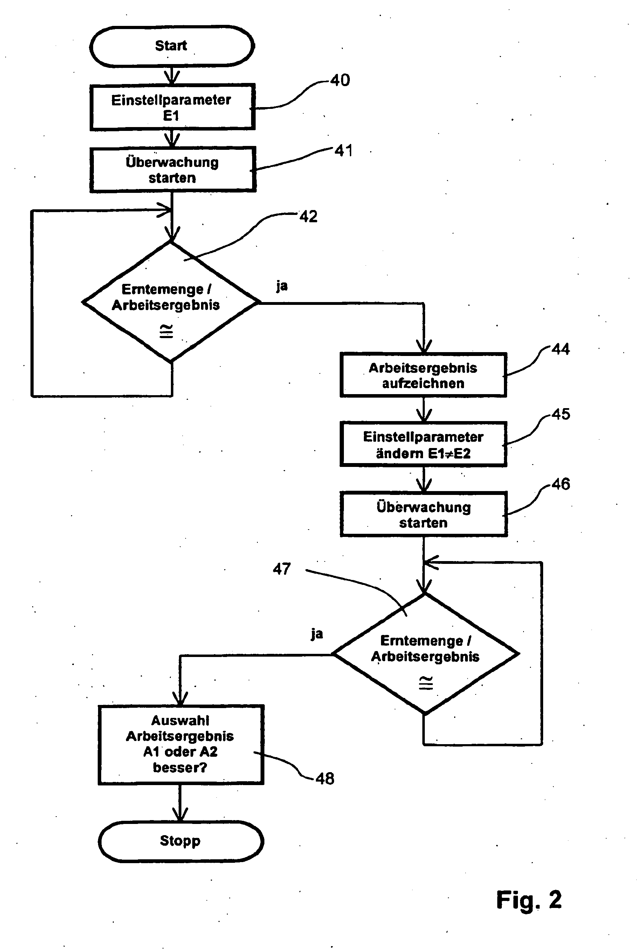

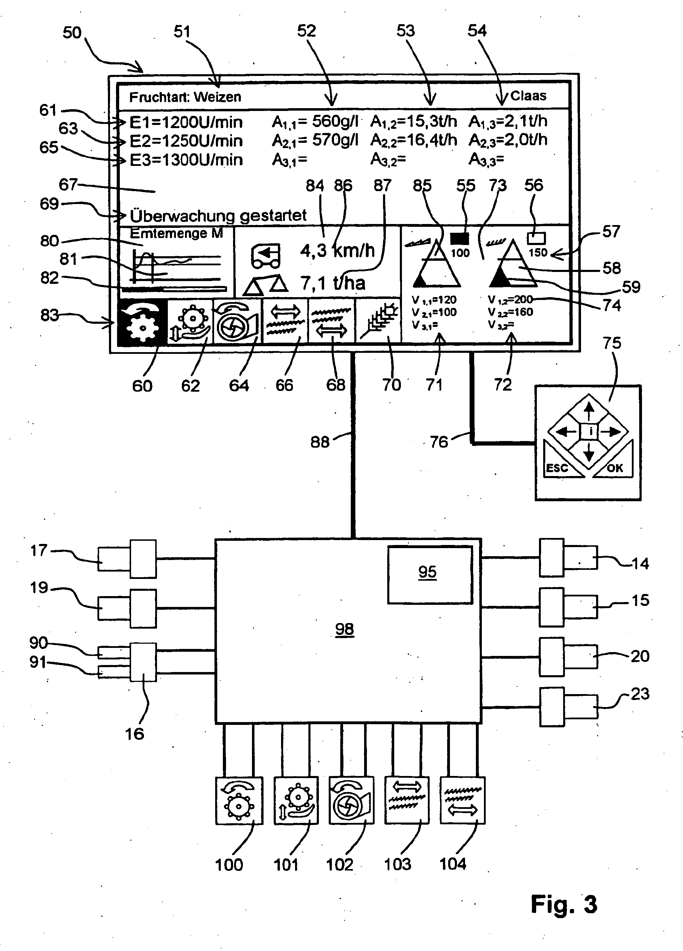

Figur 2 zeigt ein Flussdiagramm nachdem das erfindungsgemäße Verfahren arbeitet. Dargestellt ist eine einfache Ausführungsform des erfindungsgemäßen Verfahrens. Zur Aktivierung einer Vorrichtung, die nach dem erfindungsgemäßen Verfahren arbeitet, besteht für einen Bediener der landwirtschaftlichen Erntemaschine 1 die Möglichkeit, mittels der Steuer- und Monitoreinrichtung 29 ein entsprechendes zughöriges Untermenü zu starten. In einem ersten Verfahrensschritt 40 stellt der Bediener der Erntemaschine ein Arbeitsaggregat 6,8,10,11 oder 24 nach einem ersten Einstellparameter E1 ein. Hierbei kann er selbstverständlich auch den schon eingestellten Einstellparameter E1 aus einer vorher vorgenommenen manuellen oder fruchtartbezogenen Standarteinstellung aus einem vorherigen Menü übernehmen. Anschließend startet er, in einem zweiten Verfahrensschritt 41, die Überwachung zumindest eines Arbeitsergebnisses. Damit nun das Arbeitsergebnis in ein annähernd gleichbleibendes Ergebnis überführt wird, hat der Bediener der landwirtschaftlichen Erntemaschine 1 nach dem Starten dafür zu sorgen, dass die Erntemaschine 1 mit einer annähernd gleichbleibenden Erntegutmenge M beaufschlagt wird. Dieses erreicht er, beispielsweise beim Arbeiten mit einem Mähdrescher 1, indem er in einem gleichbleibenden Erntegutbestand, zum einen mit einer gleichbleibenden Arbeitsbreite des Vorsatzgerätes, d.h. mit einer gleichbleibenden Schnittbreite des Getreideschneidwerkes 2 und zum andern mit einer gleichbleibenden Arbeitsgeschwindigkeit erntet. Weiterhin hat er darauf zu achtet, dass die Schnitthöhe annähernd gleich bleibt. Die Überwachung der Erntemenge M und der Arbeitsergebnisse kann der Bediener des Mähdreschers 1 anhand von Sichtkontrollen oder in der Fahrerkabine angezeigten Sensorwerten, beispielsweise durch eine Verlustanzeige oder eine einfache Sichtkontrolle der einsehbaren Überkehreinrichtung vornehmen. Ferner muss der Bediener darauf achten, dass bei der Ermittlung der Arbeitsergebnisse, die jeweiligen weiteren Arbeitsaggregate zumindest mit einer fruchtartabhängigen Standart- Einstellung betrieben werden. Stellt er dann in einem ersten Entscheidungsschritt 42 ein zumindest annähernd gleichbleibendes Arbeitsergebnis A1 fest, so veranlasst er in einem weiteren, dritten Verfahrensschritt 44, die Aufzeichnung wenigstens eines Arbeitsergebnisses A1. Hierzu bedient sich der Bediener des Mähdreschers 1 bekannter Mittel, wie beispielsweise einer Notiz auf einem Zettel, eines Verdrehens eines manuellen Zeigers auf einem Zeigerinstruments an die Stelle des angezeigten Wertes oder einer Hinterlegung des Arbeitsergebnisses in eine vorhandene Speichereinrichtung. Anschließend veranlasst er in einem vierten Verfahrensschritt 45, dass das Arbeitsaggregat 6,8,10,11 oder 24 mit einem zweiten, von dem Einstellparameter E1 unterschiedlichen Einstellparameter E2 eingestellt wird. Eine Überwachung des wenigstens einen Arbeitsergebnisses wird in einem fünften Verfahrensschritt 46 erneut von dem Bediener der landwirtschaftlichen Erntemaschine 1 gestartet. In einem zweiten Entscheidungsschritt 47, führt ein erkanntes annähernd gleichbleibendes Arbeitsergebnis, zu einem letzten Verfahrenschritt 48. In diesem sechsten Verfahrensschritt 48 besteht für den Bediener der landwirtschaftlichen Erntemaschine 1 die Möglichkeit, das aufgezeichnete Arbeitsergebnis A1 mit dem momentanen Arbeitsergebnis A2 zu vergleichen und eines der beiden Arbeitsergebnisse A1 oder A2 als besser zu deklarieren. Wie in der Figur 3 näher dargestellt, können auch mehrere Arbeitsergebnisse zu einem Einstellparameter E1 aufgezeichnet werden. Des weiteren kann das beschriebene erfindungsgemäße Verfahren beliebige oft und für beliebige unterschiedliche Einstellparameter angewendet werden. So ist es beispielsweise vorgesehen, dass für ein Aggregat 6,8,10,11,24 nach einer vorgegebenen Anzahl von Einstellparameter E1 bis EX mit fest zugeordneten Einstellwerten jeweils nacheinander und unabhängig einer vorgeschlagenen fruchtartabhängigen Einstellung, Arbeitsergebnisse erfindungsgemäß ermittelt werden. In Verbindung mit dem ausgewählten Arbeitsaggregat 6,8,10,11,24 und dem gewählten Einstellparameter, werden dann ein oder mehrere Arbeitsergebnisse aufgezeichnet, anhand welchen dann ein Einstellparameter für ein Aggregat 6,8,10,11,24 ausgewählt wird.
Die Vorgabe von Einstellparametern E1 bis EX, nach welchen erfindungsgemäß ein besserer Einstellparameter ermittelt werden soll, kann ferner durch eine freie Vorgabe durch den Bediener des Mähdreschers 1 oder durch eine automatische Vorgabe von Einstellparametern um den momentan eingestellten Einstellparameter herum erfolgen.

Beispielsweise ist die Dreschtrommeldrehzahl des Mähdreschers 1 aus einem Speichermittel unter Angabe einer Fruchtart zuvor ausgewählt und mit E1=1200U/min eingestellt worden. Mit dem Starten des erfindungsgemäßen Verfahrens, wird dieser Einstellparameter E1 als Basis für weitere Einstellwerte E2 bis EX, mit zum Beispiel E2=1150U/min, E3=1100U/min, E4=1250U/min und E5=1300U/min vorgegeben. Für jeden Einstellparameter E1 bis EX wird dann nach dem erfindungsgemäßen Verfahren wenigstens ein Arbeitsergebnis A1 ermittelt und aufgezeichnet. Dabei steht es dem Bediener frei, ob er jeden vorgegebenen Einstellparameter erfindungsgemäß verwendet. Stellt er beispielsweise fest, dass die Arbeitsergebnisse weitab von den Zielen liegen, kann er vorgegebene Einstellparameter überspringen oder selbst eigene, neue Einstellparameter vorgeben.
Die Auswahl des Einstellparameters E1 bis EX, mit dem der Bediener des Mähdreschers 1 nach erfolgter erfindungsgemäßer Ermittlung von Arbeitsergebnissen weiterarbeiten möchte, kann von ihm frei oder auch automatisch von der Steuereinrichtung 29 beispielsweise unter Berücksichtigung von Zielvorgaben vorgenommen werden. So ist es zum Beispiel vorgesehen, dass bei der erfindungsgemäßen Ermittlung von Einstellparametern E1 bis EX für die Dreschtrommeldrehzahl beziehungsweise für den Dreschkorbabstand, der Einstellparameter als der beste Einstellparameter ausgewählt wird, der zu dem höchsten spezifischen Gewicht des Erntegutes 52 und/oder zur höchsten Ertragsmenge, unter Einhaltung einer Grenze für die Verlustsignale 71,72, für die Überkehrmenge und/oder für die Überkehrkornmenge in dem Mähdrescher 1 geführt hat. Wobei bei der Auswahl vordergründig der vorhandene Kornbruch, das spezifische Gewicht des Erntegutes 52 und der Ertrag beachtet werden.
Bei der erfindungsgemäßen Ermittlung von Einstellparametern für die Reinigungseinrichtung 10,11,24, wie beispielsweise der Einstellparameter für die Drehzahl des Reinigungsgebläses 24 oder ein Einstellparameter für die Sieböffungsweite des Unteroder des Obersiebs 10,11, ist es vorgesehen, dass der Einstellparameter E1 bis EX als der beste Einstellparameter ausgewählt wird, der zu der geringsten Überkehrmenge 54 unter Einhaltung einer Grenze für die Verlustsignale 71,72 und/oder der Überkehrkornmenge in dem Mähdrescher 1 geführt. Als ein weiteres Auswahlkriterium kann außerdem oder zusätzlich die Kornsauberkeit berücksichtigt werden. Die Sauberkeit des Erntegutes stellt ein weiteres Arbeitsergebnis dar und kann durch eine Sichtkontrolle des Bedieners oder durch geeignete Sensoren ermittelt werden. Aus der Höhe des spezifischen Gewichts des Erntegutes 52, lässt sich, unter der Annahme das die schwersten Bestandteile des Erntegutes das Erntegut selbst ist, bezüglich der Sauberkeit die Aussage ableiten, dass das Arbeitsergebnis mit dem höheren spezifischen Gewicht 52 auch das Arbeitsergebnis mit der höheren Sauberkeit ist. Verunreinigungen wie Spreu, Stroh oder Ährenteile besitzen eine geringere Dichte und bewirken in Verbindung mit dem Erntegut eine Verringerung des spezifischen Gewichts des Erntegutes 52. Für den Bediener des Mähdreschers 1 besteht ferner die Möglichkeit, Arbeitsergebnisse, die nicht von einem Sensor erfasst werden, durch eine freie Eingabe einem Einstellparameter 61,63,65 zuordnen zu können. Hierzu können Handaufzeichnungen oder auch spezielle Untermenüpunkte in einer Steuer- und Monitoreinrichtung 29 vorgesehen sein. Der Bediener ordnet dann beispielsweise aus einer vorhanden Liste, die Wertung ausreichend, befriedigend, gut oder sehrgut, dem Einstellparameter 61,62,63 als Arbeitsergebnis für die Sauberkeit zu.

In Figur 3 wird ein Aufbau der erfindungsgemäßen Vorrichtung in einem Mähdrescher 1 gezeigt. Der dargestellte Monitor 50 ist Teil der Steuer- und Monitoreinrichtung 29 in der Fahrerkabine 35 des Mähdreschers 1 und in mehrere Anzeigefelder 67,73,80,83 und 84 aufgeteilt. Die einzelnen Inhalte der jeweiligen Anzeigefelder 67,73,80,83 und 84 sind abhängig von dem gewählten Menü. Mittels einem über eine elektrische Verbindung 76 mit dem Monitor 50 in Verbindung stehenden Bedienfeld 75, kann der Bediener des Mähdreschers 1 verschiedene Arbeitsweisen der Steuer- und Monitoreinrichtung 29 aktivieren und in Form von zugehörigen Anzeigen auf dem Monitor 50 zur Darstellung bringen. Femer kann er hiermit Einstellungen der Erntemaschine 1 auswählen und verändern. In der Kopfleiste des Monitors 50, wird die zuvor über das Menüfeld Fruchtart 70 ausgewählte Fruchtart Weizen 51 angezeigt. Aus dem Anzeigefeld Menü 83 kann der Bediener der Erntemaschine 1 jeweils auswählen, für welchen Einstellparameter des Mähdreschers 1 nach dem erfindungsgemäßen Verfahren eine verbessert Einstellung ermittelt werden soll. Durch ein erstes Menüfeld Dreschtrommel 60, kann der Bediener des Mähdreschers 1 eine Verbesserung des Einstellparameters Dreschtrommeldrehzahl auswählen. Ein zweites Menüfeld Dreschkorb 62 ist für eine Verbesserung des Einstellparameters "Dreschkorbabstand" vorgesehen. Das dritte Menüfeld Reinigungsgebläse 64, dient zur Vorwahl der erfindungsgemäßen Findung einer verbesserten Reinigungsgebläsedrehzahl. Durch die Menüfelder Obersieb 66 und Untersieb 68, lassen sich jeweils für die Öffnungsweite der Siebe erfindungsgemäße Findungen für einen verbesserten Einstellparameter durchführen.

Der Monitor 50 zeigt in der Figur 3 die Ereignisse in einem Mähdrescher 1 während der Ermittlung einer verbesserten Einstellung für die Dreschtrommeldrehzahl nach dem erfindungsgemäßen Verfahren an. Dies ist an der negierten Darstellung des Menüfeldes Dreschtrommel 60 erkennbar. In der Ereignisfeldanzeige 67 sind in Tabellenform, Einstellparameter 61,63,65 in Verbindung der jeweiligen Arbeitsergebnisse 52,53,54 dargestellt. Weiterhin wird mittels einer Statusanzeige 69, der Bediener des Mähdreschers 1 durch Fragen und Aussagen während des Ablaufes durch das erfindungsgemäße Verfahren geleitet und der Fortgang der Ermittlung von Einstellparameter und Arbeitsergebnisse angezeigt. Dieser dargestellten Ereignisfeldanzeige 67 ist entnehmbar, dass das erfindungsgemäße Verfahren für einen ersten Einstellparameter 61 und einen zweiten Einstellparameter 62 durchgeführt und abgeschlossen ist. Momentan ist die Dreschtrommeldrehzahl auf 1300U/min eingestellt und laut der Statusanzeige 69, ist die Überwachung der Erntemenge M und der Arbeitsergebnisse gestartet. Zu dem Einstellparameter E3 werden in der dargestellten Ereignisanzeige 67 noch keine Arbeitsergebnisse angezeigt, da diese die Bedingung "annähernd gleichbeleibend" noch nicht erfüllen. Alternativ können die aktuellen Werte für die Arbeitsergebnisse 52,53,54 auch durch eine jeweils blinkende Darstellung angezeigt werden. Erfüllt dann das Arbeitsergebnis die Bedingung, wechselt die Anzeige dann in eine ständige Anzeige.
Die jeweiligen aktuellen Maschinen- und Arbeitsergebnisse können den Anzeigefeldern 73,80 und 84 entnommen werden. Die von dem Mähdrescher 1 aufgenommene Erntemenge M, wird in dem Anzeigefeld Erntemenge 80 in einem Diagramm 81 dargestellt. Die Erntemenge. M wird hier über die Zeit aufgetragen und kann so von dem Bediener des Mähdreschers 1 verfolgt werden. Durch zwei waagrechte Linien werden in dem Diagramm 81 die Toleranzgrenzen für die Erntemenge M angezeigt. Anhand dieser dargestellten Grenzen, kann der Bediener und/oder die Steuervorrichtung 98 erkennen, ob eine annähernd gleichbleibende Erntemenge von dem Mähdrescher 1 verarbeitet wird. Die senkrechte Linie in diesem Diagramm 81 zeigt an, dass die Erntemenge ab diesem Zeitpunkt innerhalb der Toleranzbandes liegt. Ab diesem Zeitpunkt wird gleichzeitig eine Zeitüberwachung gestartet, die überprüft, wie lange die Erntemenge M schon innerhalb des Toleranzbandes liegt. Die in diesem Anzeigefeld 80 angeordnete Balkenanzeige 82, zeigt durch den ausgefüllten Balkenteil die verstrichene Zeit an, in welcher die Erntemenge schon innerhalb des Toleranzbandes liegt. Durch die gesamte Länge des Balkens wird die erforderliche Zeitdauer zur Erfüllung der annähernd gleichbleibenden Bedingung angegeben. Ein ausgefüllter Balken gibt somit an, dass die Bedingung einer annähernd gleichbleibenden Erntemenge erfüllt ist.
In dem Anzeigefeld 84 bekommt der Bediener des Mähdreschers 1 laufend die Fahrgeschwindigkeit 86 und den aktuellen Ertrag 87 angezeigt. Anhand dieser Anzeigen 86,87, kann der Bediener des Mähdreschers 1 überwachen, inwieweit der Mähdrescher 1 mit einer konstanten Fahrgeschwindigkeit betrieben und der Ertrag der Bearbeitungsfläche 32 variiert.
In einem weiteren Anzeigefeld Verluste 73 bekommt der Bediener des Mähdreschers 1 in einer ersten Verlustanzeige 85, den aktuellen Schüttlerverlust und in einer weiteren Verlustanzeige 58 den aktuellen Obersiebverlust angezeigt. Je nach dem welcher Einstellparameter eines Aggregates 6,8,10,11,24 zur Verbesserung ausgewählt ist, können in diesem Anzeigefeld 73 auch weitere Werte, wie beispielsweise die Untersiebverluste oder auch Ergebnisse der Überkehrmesseinrichtung 16 in geeigneten Anzeigen angezeigt werden. In Abhängigkeit der Fruchtart und eventuell weiteren Zielvorgaben, wird durch eine numerische Anzeige und/oder einer waagerechten Linie in dem jeweiligen Anzeigedreieck ein Grenzwert 57 für den Verlustwert angegeben beziehungsweise angezeigt. Innerhalb der jeweiligen Anzeige 58,85, wird der relative aktuelle Verlustwert durch ein ausgefülltes schwarzes Dreieck 59, positioniert an der linken unteren Ecke, angezeigt. Das Anzeigefeld 73 beinhaltet unterhalb der jeweiligen Verlustanzeige 58,85 eine Liste mit Verlustergebnissen 71,72 für die Schüttlerverluste und für die Obersiebverluste. Jedem dieser Verlustwerte 74 kann, erkennbar an der Indizierung V_{x,y}, ein Einstellparameter 61, 63 oder 65 zugeordnet werden. Diese Verlustergebnisse 71,72 stellen somit weitere Arbeitsergebnisse des Mähdreschers 1 dar: Der jeweiligen Verlustanzeige 58,85 ist außerdem eine Bedingungsanzeige 55, 56 zugeordnet. Die Bedingungsanzeige 55 zeigt durch die ausgefüllte Darstellung an, dass die für die Schüttlerverluste vorgegebene Bedingung; beispielsweise ein annähernd gleichbleibendes Arbeitsergebnis, schon erfüllt ist. Diese Bedingung richtet sich nach festen Vorgaben beispielsweise nach dem aktuellen Verlustwert, der Dynamik dieses Wertes und dem Verlauf der Erntemenge. Aus dem Balkenanzeige 82 ist entnehmbar, dass die Erntemenge schon eine gewisse Zeit innerhalb des Toleranzbandes verläuft, aus der aktuellen Verlustanzeige für die Schüttler, ist ein relativ geringer Verlustwert zu entnehmen und es hat sich außerdem schon gezeigt, dass der Verlustwert recht konstant ist, daher ist nicht. zu erwarten, dass der Schüttlerverlust eine noch größere Änderung erfahren wird. Die Bedingung des annähernd gleichbleibenden Arbeitsergebnisses ist daher für dieses Arbeitsergebnis schon erreicht. Für den Obersiebverlust zeigt die Bedingungsanzeige 55 eine noch nicht erfüllte Bedingung an.

Aus den Anzeigen 67 und 73 sind für zwei Einstellparameter 61,63 zugehörige Arbeitsergebnisse 52,53,54,71,72 vorhanden. Das erste Arbeitsergebnis 52 zeigt das spezifische Gewicht des Erntegutes in g/l an. Das zweite Arbeitsergebnis 53 gibt den Erntegutdurchsatz in t/h an. Als ein drittes Arbeitsergebnis 54 wird der ermittelte Überkehrdurchsatz angezeigt. Die Verlustergebnisse 71,72 werden nur relativ angezeigt. Der Bediener des Mähdreschers 1 kann aus den beiden Sätzen von Arbeitsergebnissen schon jetzt erkennen, dass mit der Erhöhung der Dreschtrommeldrehzahl, von 1200U/min auf 1250U/min, eine Erhöhung des spezifischen Erntegutgewichtes 52 und des Durchsatzes 53 sowie gleichzeitig eine Verringerung der Verluste erreicht wurde. Liegen dann die Arbeitsergebnisse 52,53,54,71,72 für den dritten Einstellparameter E3 vor, wird der Bediener des Mähdreschers 1 über die Statusanzeige 69 aufgefordert, mittels des Bedienfeldes 75 einen weiteren Einstellparameter E4 anzugeben oder einen Einstellparameter 61,63 oder 65 als den besten Einstellparameter auszuwählen.

In einer weiteren Ausgestaltungsform der Erfindung wird der jeweilige Wert des nächste Einstellparameters durch eine spezielle Abfrageroutine festgelegt. Dabei beurteilt der Bediener des Mähdreschers 1 die ermittelten Arbeitsergebnis 52,53,64,71,72 anhand von Fragen, wie beispielsweise "Ergebnisse OK?", "Kornbruch OK?", Verluste OK?", Verluste zu niedrig? oder "Erntegeschwindigkeit zu langsam?", durch eine einfache ja/nein- Beantwortung. Die Steuereinrichtung 98 wählt dann automatisch einen neuen Wert für den Einstellparameter aus, für welchen dann anhand des erfindungsgemäßen Verfahrens neue Arbeitergebnisse 52,53,54,71,72 ermittelt werden.

Der Monitor 50 steht über eine weitere elektrische Verbindung 88 mit einer Steuereinrichtung 98 in Verbindung. Diese Verbindung ist als eine dem Fachmann bekannte mehradrige Leitung oder als eine sonstige bekannte Datenverbindung ausgeführt und dient dem bidirektionalen Datenaustausch zwischen dem Monitor 50 und der Steuereinrichtung 98. Innerhalb dieser Steuereinrichtung 98 ist wenigstens eine Speichereinrichtung 95 zur Aufzeichnung von Arbeitsergebnissen A_{1,1} bis A_{x,y} und/oder von fruchtartspezifischen Einstellparametern für die Arbeitsaggregate 6,8,10,11,24 des Mähdreschers 1 angeordnet. Die Steuereinrichtung 98 steht unter anderem mit weiteren Sensoren 14,15,16,17,19,20,23 und weiteren Einrichtungen im Mähdrescher 1 zur Erfassung von emtemaschinespezifischen, erntegutspezifischen und/oder emteprozessspezifischen Parametern in Verbindung. Wobei die einzelnen Parameter in bekannter Weise über weitere elektrische Verbindungen auch an weitere Einrichtungen übermittelt oder weitere Parameter von weiteren Einrichtungen empfangen werden können. Dieser Datenaustausch ist beispielsweise von den an Erntemaschinen eingesetzten CAN-Bus-Systemen bekannt.
An die Steuereinrichtung 98 ist eine Überkehrmesseinrichtung 16 angeschlossen, die sich wiederum aus einem Sensor zur Ermittlung des Überkehrdurchsatzes 91 und einem Sensor zur Ermittlung der Überkehrkornmenge 90 zusammensetzt. Beide Sensoren 90,91 können auch separat ausgeführt und an unterschiedlichen Stellen im Mähdrescher 1, Parameter der Überkehr ermitteln. Weitere angeschlossene Sensoren sind die am Obersieb 10 und an den Schüttlern 9 angeordneten Verlustmesseinrichtungen 17,19, sowie ein mit dem Kornelevator 13 in Verbindung stehendes Ertragsmesssystem 14. Zur Ermittlung des spezifischen Gewichts des Erntegutes 52, wird eine bestimmte Menge des Erntegutes einer Kalibrierwaage 15 zugeführt und der Messwert von der Steuereinrichtung 98 erfasst. Die Steuereinrichtung 98 steht ferner mit einer Messeinrichtung 20 zur Erfassung der Erntemenge M und mit einer Messeinrichtung 23 zur Erfassung der Fahrgeschwindigkeit in Verbindung.
An die Steuereinrichtung 98 sind weitere Steuerungen 100- 104 untergeordnet angeschlossen. Die hierzu notwendigen elektrischen Verbindungen sind in der Figur 3 beispielhaft jeweils zweifach ausgeführt und stellen zum einen den Übertragungsweg für einen Einstellparameter von der Steuereinrichtung 98 zu der jeweiligen Steuerung 100- 104 als Soll- Einstellparameter und zum anderen den Übertragungsweg von der jeweiligen Steuerung 100- 104 zu der Steuereinrichtung 98 als ein Ist- Einstellparameter dar. Unabhängig des Erntebetriebs kann ein Bediener des Mähdreschers 1 aus der Speichereinrichtung 95 beispielsweise jeweils einen fruchtartabhängigen Einstellparameter für die Dreschtrommeldrehzahl, den Dreschkorbabstand, die Reinigungsgebläsedrehzahl, die Obersieböffnungsweite und die Untersieböffnungsweite auswählen und zu der Dreschtrommelsteuerung 100, der Dreschkorbsteuerung 101, der Reinigungsgebläsesteuerung 102, der Obersiebsteuerung 103 und der Untersiebsteuerung 104 übertragen. Die jeweilige Steuerung 100- 104 bewirkt daraufhin, dass durch vorhandene geeignete Stellmittel der jeweilige Soll- Einstellparameter für das Arbeitsaggregat 6,8,10,11,24 eingestellt und durch geeignete Messeinrichtungen 18,21,25,26,31 als Ist- Einstellparameter erfasst und an die Steuereinrichtung 98 übertragen wird. Die Zusammenfassung der einzelnen Steuerungen 100- 104 in gemeinsame Steuerung oder die direkte Einbindung der einzelnen Steuerungen 100- 104 in die Steuereinrichtung 98, stellen eine Vereinfachung des Aufbaus dar und liegen im Ermessen des ausführenden Fachmanns.

Die vorstehenden Erklärungen zu den einzelnen Figuren beziehen sich alle auf die Verwendung und Anwendung der Erfindung auf einen Mähdreschern 1. Es ist aber für einen Fachmann naheliegend, diese Erfindung auf jegliche Arten von Erntemaschinen zum Beispiel Feldhäcksler zu übertragen, die zumindest einen Arbeitsaggregat mit einem Einstellparameter zur Beeinflussung des Arbeitsergebnisses aufweisen. So ist es auch durchaus denkbar, Einstellungen an einem Vorsatzgerät, wie beispielsweise einem Schneidwerk 2 und an den Einzugs- und Förderelementen, mittels des erfindugnsgemäßen Verfahrens zu ermitteln.

### Bezugszeichenliste:

- 1.: Mähdrescher
- 2.: Schneidwerk
- 3.: Schrägförderer
- 4.: Einzugskette
- 5.: Vorbeschleunigertrommel
- 6.: Dreschtrommel
- 7.: Wendetrommel
- 8.: Dreschkorb
- 9.: Schüttler
- 10.: Obersieb
- 11.: Untersieb
- 12.: Überkehrelevator
- 13.: Kornelevator
- 14.: Ertragsmesssystem
- 15.: Kalibrierwaage
- 16.: Überkehrmesseinrichtung
- 17.: Obersieb- Verlustmesseinrichtung
- 18.: Obersieb- Weitenmesseinrichtung
- 19.: Schüttler- Verlustmesseirichtung
- 20.: Erntemengenmesseinrichtung
- 21.: Dreschkorb- Weitenmesseinrichtung
- 22.: Schnitthöhen- Messeinrichtung
- 23.: Fahrgeschwindigkeits- Messeinrichtung
- 24.: Reinigungsgebläse
- 25.: Reinigungsgebläse- Messeinrichtung
- 26.: Untersieb- Weitenmesseinrichtung
- 27.: Vorbereitungsboden
- 28.: Rücklaufboden
- 29.: Steuer- und Monitoreinrichtung
- 30.: Bedien- und Anzeigeeinrichtung
- 31.: Dreschtrommeldrehzahl- Messeinrichtung
- 32.: Bearbeitungsfläche
- 33.: Korntank
- 34.: Fallstufe
- 35.: Fahrerkabine
- 40.: Ereignisschritt 1
- 41.: Ereignisschritt 2
- 42.: Entscheidungsschritt 1
- 44.: Ereignisschritt 3
- 45.: Ereignisschritt 4
- 46.: Ereignisschritt 5
- 47.: Entscheidungsschritt 2
- 48.: Ereignisschritt 6
- 50.: Monitor
- 51.: Fruchtart
- 52.: Arbeitsergebnis 1
- 53.: Arbeitsergebnis 2
- 54.: Arbeitsergebnis 3
- 55.: Bedingungsanzeige Schüttler
- 56.: Bedingungsanzeige Obersieb
- 57.: Grenzwert Verluste
- 58.: Verlustanzeige Obersieb
- 59.: Verlustwert
- 60.: Menüfeld Dreschtrommel
- 61.: Einstellparameter 1
- 62.: Menüfeld Dreschkorbabstand
- 63.: Einstellparameter 2
- 64.: Menüfeld Reinigungsgebläse
- 65.: Einstellparameter 3
- 66.: Menüfeld Obersieb
- 67.: Ereignisanzeigefeld
- 68.: Menüfeld Untersieb
- 69.: Statusanzeige
- 70.: Menüfeld Fruchtart
- 71.: Verlustergebnisse Schüttler
- 72.: Verlustergebnisse Obersieb
- 73.: Anzeigefeld Verluste
- 74.: Verlustwert
- 75.: Bedienfeld
- 76.: elektrische Verbindung
- 80.: Anzeigefeld Erntemenge
- 81.: Diagramm
- 82.: Balkenanzeige
- 83.: Anzeigefeld Menü
- 84.: Anzeigefeld
- 85.: Verlustanzeige Schüttler
- 86.: Fahrgeschwindigkeit
- 87.: Ertrag
- 88.: elektrische Verbindung
- 90.: Sensor Kornmenge
- 91.: Sensor Volumen
- 95.: Speichereinrichtung
- 98.: Steuereinrichtung
- 100.: Dreschtrommelsteuerung
- 101.: Dreschkorbsteuerung
- 102.: Reinigungsgebläsesteuerung
- 103.: Obersiebsteuerung
- 104.: Untersiebsteuerung

## Patentansprüche

1. Verfahren zur Ermittlung einer an den Ernteprozess angepassten Einstellung einer landwirtschaftlichen Erntemaschine (1), mit wenigstens einem auf das Arbeitsergebnis der landwirtschaftlichen Erntemaschine (1) einflussnehmenden Arbeitsaggregat (6,8,10,11,24), wobei zumindest ein Einstellparameter des Arbeitsaggregats (6,8,10,11,24) variierbar ist,
**dadurch gekennzeichnet, dass**
- die landwirtschaftliche Erntemaschine (1) im Arbeitseinsatz mit einer annähernd gleichbleibenden Erntegutmenge beaufschlagt wird,
- wenigstens ein annähernd gleichbleibendes Arbeitsergebnis A1 abgewartet und dieses aufgezeichnet wird,
- ein Einstellparameter eines einstellbaren Arbeitsaggregates (6,8,10,11,24) verändert und erneut wenigstens ein annähernd gleichbleibendes Arbeitsergebnis A2 der landwirtschaftlichen Erntemaschine (1) im Arbeitsbetrieb abgewartet wird, und
- anhand der Arbeitsergebnisse A1,A2, ein Einstellparameter für das Arbeitsaggregat (6,8,10,11,24) ausgewählt wird, welcher zu dem besseren Arbeitsergebnis A1,A2 der landwirtschaftlichen Erntemaschine (1) geführt hat, und
- die Beaufschlagung der landwirtschaftlichen Erntemaschine (1) mit einer annähernd gleichbleibenden Erntegutmenge, durch zumindest eine Einrichtung (20) ermittelt und die Einhaltung zumindest dem Bediener durch geeignete Mittel (81,82) angezeigt wird.

2. Verfahren nach Anspruch 1,
**dadurch gekennzeichnet, dass**
die Vorgabe wenigstens eines Einstellparameters für das wenigstens eine Arbeitsaggregat (6,8,10,11,24), für ein erstes Arbeitsergebnis A1 der landwirtschaftlichen Erntemaschine (1) aus einer Speichereinrichtung (95) in. Abhängigkeit von zumindest einer Ernteguteigenschaft und/oder zumindest einer erntegutspezifischen Größe auswählbar bereit gehalten wird.

3. Verfahren nach wenigstens einem der Ansprüche 1 oder 2,
**dadurch gekennzeichnet, dass**
der variierte Einstellparameter des Arbeitsaggregates (6,8,10,11,24) in Verbindung mit dem Arbeitsergebnis (52,53,54,71,72) aufgezeichnet wird.

4. Verfahren nach wenigstens einem der Ansprüche 1 bis 3,
**dadurch gekennzeichnet, dass**
die Erntegutmenge, mit der die landwirtschaftliche Erntemaschine (1) beaufschlagt wird und/oder wenigstens ein Arbeitsergebnis (52,53,53,71,72) der landwirtschaftlichen Erntemaschine (1), durch zumindest einen Sensor (14,15,16,17,19,20) erfasst und dem Bediener der landwirtschaftlichen Erntemaschine (1) zur Überwachung angezeigt wird.

5. Verfahren nach wenigstens einem der Ansprüche 1 bis 4,
**dadurch gekennzeichnet, dass**
das Vorliegen eines annähernd gleichbleibenden Arbeitsergebnisses der landwirtschaftlichen Emtemaschine (1), zumindest eines Arbeitsergebnisses (51,52,53,71,72), durch zumindest eine Steuereinrichtung (98) ermittelt und die Einhaltung zumindest dem Bediener durch geeignete Mittel (55,56) angezeigt wird:

6. Verfahren nach wenigstens einem der Ansprüche 1 bis 5,
**dadurch gekennzeichnet, dass**
in der jeweiligen Einrichtung, die Beaufschlagung der landwirtschaftlichen Erntemaschine (1) mit einer annähernd gleichbleibenden Erntegutmenge und/oder das Vorliegen zumindest eines annähernd gleichbleibenden Arbeitsergebnisses (52,53,54,71,72) anhand eines jeweils vorgegebenen Toleranzbandes sowie einer vorgegebenen Zeitspanne ermittelt wird.

7. Verfahren nach wenigstens einem der Ansprüche 1 bis 6,
**dadurch gekennzeichnet, dass**
die Einrichtung, nach dem Vorliegen und der Aufzeichnung eines erstens Arbeitsergebnisses A1 der landwirtschaftlichen Erntemaschine (1), wenigstens einen Einstellparameter des einzustellenden Arbeitsaggregates (6,8,10,11,24) automatisch verändert, erneut ein annähernd gleichbleibendes Arbeitsergebnis abwartet und das sich einstellende neue Arbeitsergebnis A2 als ein weiteres Arbeitsergebnis aufgezeichnet.

8. Verfahren nach Anspruch 7,
**dadurch gekennzeichnet, dass**
der Einstellparameter automatisch nach einer vorgegebenen Anzahl, Größe und Richtung in Abhängigkeit des einzustellenden Arbeitsaggregates (6,8,10,11,24) verändert wird.

9. Verfahren nach wenigstens einem der Ansprüche 1 bis 8,
**dadurch gekennzeichnet, dass**
anhand der aufgezeichneten Arbeitsergebnisse (52,53,54,71,72) der beste Einstellparameter für das Arbeitsaggregat (6,8,10,11,24) automatisch ausgewählt wird.

10. Verfahren nach wenigstens einem der Ansprüche 1 bis 9,
**dadurch gekennzeichnet, dass**
die Arbeitsergebnisse (52,53,54,71,72) anhand von wenigstens einem, durch die Erntegutart (51) und/oder wenigstens einer Zielvorgabe vorgegebenen Kriterium bewertet, das bessere Arbeitsergebnis A1,A2 der landwirtschaftlichen Emtemaschine entsprechend abgeleitet und der wenigstens eine Einstellparameter für ein Arbeitsaggregat (6,8,10,11,24) danach bestimmt wird.

11. Verfahren nach wenigstens einem der Ansprüche 1 bis 10,
**dadurch gekennzeichnet, dass**
anhand der aufgezeichneten Arbeitsergebnisse (52,53,54,71,72), eine Beziehung zwischen dem jeweiligen variierten Einstellparameter E1,E2,E3 und dem jeweiligen zugehörigen Arbeitsergebnis (52,53,54,71,72) ermittelt und anhand dieser Beziehung ein Einstellparameter ermittelt oder ausgewählt wird, der anhand dieser Beziehung zu dem besten Arbeitsergebnis führt.

12. Verfahren nach wenigstens einem der Ansprüche 1 bis 11,
**dadurch gekennzeichnet, dass**
mehrere Einstellparameter eines einstellbaren Arbeitsaggregates (6,8,10,11,24) gleichzeitig verändert werden und erneut ein annähernd gleichbleibendes Arbeitsergebnis A1,A2 der landwirtschaftlichen Erntemaschine (1) im Arbeitsbetrieb abgewartet wird.

13. Verfahren nach wenigstens einem der Ansprüche 1 bis 12,
**dadurch gekennzeichnet, dass**
die Ermittlung einer verbesserten Einstellung, wenigstens eines einstellbaren Arbeitsaggregates (6,8,10,11,24), automatisch gesteuert und der ermittelte bessere Einstellparameter dem Bediener der landwirtschaftlichen Erntemaschine (1) angezeigt und/oder das Arbeitsaggregat (6,8,10,11,24) automatisch nach diesem Einstellparameter eingestellt wird.

14. Verfahren nach wenigstens einem der Ansprüche 1 bis 13,
**dadurch gekennzeichnet, dass**
mehrere Einstellparameter eines Arbeitsaggregates (6,8,10,11,24) und/oder die Einstellparameter mehrerer Arbeitsaggregate (6,8,10,11,24) in einer bestimmten Reihenfolge nacheinander ermittelt werden, wobei jeweils vor der Ermittlung eines weiteren Einstellparameters, ein annähernd gleichbleibendes Arbeitsergebnis (52,53,54,71,72) der landwirtschaftlichen Erntemaschine (1) im Arbeitsbetrieb abgewartet wird.

15. Verfahren nach wenigstens einem der Ansprüche 1 bis 14,
**dadurch gekennzeichnet, dass**
- der Bediener eines Mähdreschers (1), den Mähdrescher (1) im Arbeitseinsatz durch die Einhaltung zumindest einer gleichbleibenden Schnitthöhe und -breite des Vorsatzgerätes (2) und einer gleichbleibenden Erntegeschwindigkeit des Mähdreschers (1) mit einer annähernd gleichbleibenden Erntegutmenge beaufschlagt,
- wenigstens anhand einer Anzeige eines Arbeitsergebnisses, wie die Verlustsignale (71,72) und/oder die Überkehrmenge (54) und/oder die Kornmenge in der Überkehr und/oder das spezifische Gewicht des Erntegutes (52) und/oder die Ertragsmenge (53), ein annähernd gleichbleibendes Arbeitsergebnis abwartet und dieses aufzeichnet,
- ein Einstellparameter, wie wenigstens eine Dreschkorbweite oder Dreschtrommeldrehzahl des Dreschaggregates (6,8) verändert und erneut wenigstens ein annähernd gleichbleibendes Arbeitsergebnis (52,53,54,71,72) des Mähdreschers (1) im Arbeitsbetrieb abwartet, und
- anhand wenigstens eines der Arbeitsergebnisse (52,53,54,71,72), die Dreschkorbweite und/oder Dreschtrommeidrehzahl für das Dreschaggregat (6,8) auswählt, welche zu dem höchsten spezifischen Gewicht des Erntegutes und/oder zur höchsten Ertragsmenge in dem Mähdrescher (1) geführt hat.

16. Verfahren nach wenigstens einem der Ansprüche 1 bis 15,
**dadurch gekennzeichnet, dass**
- der Bediener eines Mähdreschers (1), den Mähdrescher (1) im Arbeitseinsatz durch die Einhaltung zumindest einer gleichbleibenden Schnitthöhe und -breite des Vorsatzgerätes (2) und einer gleichbleibenden Erntegeschwindigkeit des Mähdreschers (1) mit einer annähernd gleichbleibenden Erntegutmenge beaufschlagt,
- wenigstens anhand einer Anzeige eines Arbeitsergebnisses, wie die Verlustsignale (71,72) und/oder die Überkehrmenge (54) und/oder die Überkehrkornmenge und/oder das spezifische Gewicht (52) des Erntegutes und/oder die Ertragsmenge (53), ein annähernd gleichbleibendes Arbeitsergebnis abwartet und dieses aufzeichnet,
- ein Einstellparameter, wie die Drehzahl des Gebläses (24) oder die Sieböffungsweite des Unter- oder des Obersiebs (10,11) der Reinigungseinrichtung (10,11,24) verändert und erneut wenigstens ein annähernd gleichbleibendes Arbeitsergebnis (52,53,54,71,72) des Mähdreschers (1) im Arbeitsbetrieb abwartet, und
- anhand wenigstens eines der Arbeitsergebnisse (52,53,54,71,72), eine Drehzahl des Gebläses (24) oder eine Sieböffungsweite des Unter- oder des Obersiebs (10,11) auswählt, welche zu der geringsten Überkehrmenge unter Einhaltung einer Grenze für die Verlustsignale (57) und/oder der Überkehrkornmenge in dem Mähdrescher (1) geführt hat.

17. Vorrichtung zur Durchführung eines Verfahrens nach wenigstens einem der Ansprüche 1 bis 16,
**gekennzeichnet, durch**
zumindest eine Speichereinrichtung (95), zur Aufzeichnung wenigstens eines Arbeitsergebnisses (52,53,54,71,72), die mit wenigstens einer Steuereinrichtung (98) zur Ermittlung zumindest eines Arbeitsergebnisses (52,53,54,71,72) in Verbindung steht.

18. Vorrichtung nach Anspruch 17,
**dadurch gekennzeichnet, dass**
die Speichereinrichtung (95), zur Ermittlung von wenigstens einem Einstellparameter wenigstens eines Arbeitsaggregates (6,8,10,11,24), durch geeignete Mittel (18,21,25,26,31) mit dem Arbeitsaggregat (6,8,10,11,24) in Verbindung steht.

19. Vorrichtung nach wenigstens einem der Ansprüche 17 oder 18,
**dadurch gekennzeichnet, dass**
die Steuereinrichtung (98) mit weiteren Einrichtungen (14- 23,25,26,31) zur Ermittlung von emtemaschinespezifischen, erntegutspezifischen und/oder ernteprozessspezifischen Parametern in Verbindung steht.

20. Vorrichtung nach wenigstens einem der Ansprüche 17 bis 19,
**dadurch gekennzeichnet, dass**
eine landwirtschaftliche Erntemaschine (1) zumindest eine Steuereinrichtung (98) beinhaltet, die mit wenigstens einem Sensor (14,15,16,17,19) zur Ermittlung eines Arbeitsergebnisses mit wenigstens einem Sensor (18,21,25,26,31) zur Erfassung der Einstellung eines Aggregates (6,8,10,11,24) mit wenigstens einer Speichereinrichtung (95) und mit einem Bedien- und/oder Anzeigeelement (29,30) in Verbindung steht.

21. Vorrichtung nach wenigstens einem der Ansprüche 17 bis 20,
**dadurch gekennzeichnet, dass**
die Steuereinrichtung (98) mit wenigstens einem Sensor zur Ermittlung der Kornabscheidung (90), der Emtegutzusammensetzung, der Ertragsmenge (14), des spezifischen Gewichts des Erntegutes (15) und/oder der Überkehrvolumenmenge (91) in der landwirtschaftlichen Erntemaschine (1) und/oder der Ernteverluste (17,19) sowie mit wenigstens einem Sensor zu Erfassung der Fahrgeschwindigkeit (23), der Reinigungsgebläsedrehzahl (25), der jeweiligen Sieböffnungsweite (18,26), der Dreschtrommeldrehzahl (31), der Einzugstrommel und/oder - kettenauslenkung (20) und/oder der Dreschspaltweite (21) in Verbindung steht.

22. Vorrichtung nach wenigstens einem der Ansprüche 17 bis 21,
**dadurch gekennzeichnet, dass**
ein erster Sensor (23) die Fahrgeschwindigkeit der Erntemaschine (1), ein zweiter Sensor (20) die Strohmenge im Schrägförderer (3), ein weiterer Sensor (31) die Drehzahl der Dreschtrommel (6), ein weiterer Sensor (21) den Dreschspalt, ein weiterer Sensor (17) die Verluste der Reinigungseinrichtung (10,11,24) erfasst, die einzelnen Sensorwerte einer Steuereinrichtung (98) zugeführt und dort überwacht werden, die Steuereinrichtung (98) mit Bedien- und Anzeigemitteln (75,29,30,50) zur Beeinflussung der Einstellparameter und Anzeige der Arbeitsergebnisse (52,53,54,71,72) in Verbindung steht, wenigstens ein Speichereinrichtung (95) zur Aufzeichnung wenigstens eines Arbeitsergebnisses (52,53,54,71,72) enthält und mit Stellmitteln zur ferngesteuerten Einstellung der Dreschtrommeldrehzahl (100), der Dreschspaltweite (101), wenigstens einer Sieböffungsweite (103,104) und/oder der Reinigungsgebläsedrehzahl (102) in Verbindung steht.

## Claims

1. A method of ascertaining an adjustment, suited to the harvesting process, of an agricultural harvester (1) comprising at least one working assembly (6, 8, 10, 11, 24) which influences the working result of the agricultural harvester (1), wherein at least one adjustment parameter of the working assembly (6, 8, 10, 11, 24) is variable,
**characterised in that**
- the agricultural harvester (1) in working use is acted upon with an approximately constant amount of crop material,
- an at least approximately constant working result A1 is awaited and same is recorded,
- an adjustment parameter of an adjustable working assembly (6, 8, 10, 11, 24) is altered and at least one approximately constant working result A2 of the agricultural harvester (1) is again awaited in the working mode,
- an adjustment parameter for the working assembly (6, 8, 10, 11, 24) which has led to the better working result A1, A2 of the agricultural harvester (1) is selected on the basis of the working results A1, A2, and
- the loading on the agricultural harvester (1) with an approximately constant amount of crop material is ascertained by at least one device (20) and maintenance thereof is displayed at least to the operator by suitable means (81, 82).

2. A method according to claim 1 **characterised in that** the presetting of at least one adjustment parameter for the at least one working assembly (6, 8, 10, 11, 24) for a first working result A1 of the agricultural harvester (1) is kept ready for selection from a storage device (95) in dependence on at least one crop material property and/or at least one crop material-specific variable.

3. A method according to at least one of claims 1 and 2 **characterised in that** the varied adjustment parameter of the working assembly (6, 8, 10, 11, 24) is recorded in conjunction with the working result (52, 53, 54, 71, 72).

4. A method according to at least one of claims 1 to 3 **characterised in that** the amount of crop material with which the agricultural harvester (1) is acted upon and/or at least one working result (52, 53, 53, 71, 72) of the agricultural harvester (1) is detected by at least one sensor (14, 15, 16, 17, 19, 20) and displayed to the operator of the agricultural harvester (1) for monitoring purposes.

5. A method according to at least one of claims 1 to 4 **characterised in that** the presence of an approximately constant working result of the agricultural harvester (1), of at least one working result (51, 52, 53, 71, 72), is ascertained by at least one control device (98) and maintenance thereof is displayed at least to the operator by suitable means (55, 56).

6. A method according to at least one of claims 1 to 5 **characterised in that** in the respective device the loading on the agricultural harvester (1) with an approximately constant amount of crop material and/or the presence of at least one approximately constant working result (52, 53, 54, 71, 72) is ascertained on the basis of a respectively predetermined tolerance band and a preset period of time.

7. A method according to at least one of claims 1 to 6 **characterised in that** the device, after the presence and recording of a first working result A1 of the agricultural harvester (1), automatically alters at least one adjustment parameter of the working assembly (6, 8, 10, 11, 24) to be adjusted, an approximately constant working result is again awaited and the new working result A2 which is then set is recorded as a further working result.

8. A method according to claim 7 **characterised in that** the adjustment parameter is altered automatically in accordance with a predetermined number, variable and direction in dependence on the working assembly (6, 8, 10, 11, 24) to be adjusted.

9. A method according to at least one of claims 1 to 8 **characterised in that** the best adjustment parameter for the working assembly (6, 8, 10, 11, 24) is automatically selected on the basis of the recorded working results (52, 53, 54, 71, 72).

10. A method according to at least one of claims 1 to 9 **characterised in that** the working results (52, 53, 54, 71, 72) are assessed on the basis of at least one criterion predetermined by the kind of crop material (51) and/or at least one target presetting, the better working result A1, A2 of the agricultural harvester is correspondingly derived and the at least one adjustment parameter for a working assembly (6, 8, 10, 11, 24) is determined in accordance therewith.

11. A method according to at least one of claims 1 to 10 **characterised in that** a relationship between the respective varied adjustment parameter E1, E2, E3 and the respective associated working result (52, 53, 54, 71, 72) is ascertained on the basis of the recorded working results (52, 53, 54, 71, 72) and on the basis of that relationship an adjustment parameter which leads to the best working result on the basis of that relationship is ascertained or selected.

12. A method according to at least one of claims 1 to 11 **characterised in that** a plurality of adjustment parameters of an adjustable working assembly (6, 8, 10, 11, 24) are simultaneously altered and an approximately constant working result A1, A2 of the agricultural harvester (1) is again awaited in the working mode.

13. A method according to at least one of claims 1 to 12 **characterised in that** the ascertainment of an improved adjustment of at least one adjustable working assembly (6, 8, 10, 11, 24) is automatically controlled and the ascertained better adjustment parameter is displayed to the operator of the agricultural harvester (1) and/or the working assembly (6, 8, 10, 11, 24) is automatically adjusted in accordance with said adjustment parameter.

14. A method according to at least one of claims 1 to 13 **characterised in that** a plurality of adjustment parameters of a working assembly (6, 8, 10, 11, 24) and/or the adjustment parameters of a plurality of working assemblies (6, 8, 10, 11, 24) are ascertained successively in a given sequence, wherein prior to the respective ascertainment of a further adjustment parameter an approximately constant working result (52, 53, 54, 71, 72) of the agricultural harvester (1) is awaited in the working mode.

15. A method according to at least one of claims 1 to 14 **characterised in that**
- the operator of a combine harvester (1) acts on the combine harvester (1) in working use by the maintenance at least of a constant cutting height and width of the front-mounted unit (2) and a constant harvesting speed of the combine harvester (1), with an approximately constant amount of crop material,
- at least on the basis of a display of a working result such as the loss signals (71, 72) and/or the tailings amount (54) and/or the grain amount in the tailings and/or the specific weight of the crop material (52) and/or the yield amount (53) an approximately constant working result is awaited and same is recorded,
- an adjustment parameter such as at least one threshing concave width or threshing drum rotary speed of the threshing assembly (6, 8) is altered and at least one approximately constant working result (52, 53, 54, 71, 72) of the combine harvester (1) is again awaited in the working mode, and
- on the basis of at least one of the working results (52, 53, 54, 71, 72) the threshing concave width and/or the threshing drum rotary speed for the threshing assembly (6, 8) is selected, which led to the highest specific weight of the crop material and/or the highest yield amount in the combine harvester (1).

16. A method according to at least one of claims 1 to 15 **characterised in that**
- the operator of a combine harvester (1) acts on the combine harvester (1) in working use by the maintenance at least of a constant cutting height and width of the front-mounted unit (2) and a constant harvesting speed of the combine harvester (1), with an approximately constant amount of crop material,
- at least on the basis of a display of a working result such as the loss signals (71, 72) and/or the tailings amount (54) and/or the tailings grain amount and/or the specific weight (52) of the crop material and/or the yield amount (53) an approximately constant working result is awaited and same is recorded,
- an adjustment parameter such as the rotary speed of the blower (24) or the sieve opening width of the lower or the upper sieve (10, 11) of the cleaning device (10, 11, 24) is altered and at least one approximately constant working result (52, 53, 54, 71, 72) of the combine harvester (1) is again awaited in the working mode, and
- on the basis of at least one of the working results (52, 53, 54, 71, 72) a rotary speed of the blower (24) or a sieve opening width of the lower or the upper sieve (10, 11) is selected, which led to the lowest tailings amount while maintaining a limit for the loss signals (57) and/or the tailings grain amount in the combine harvester (1).

17. Apparatus for carrying out the method according to one of claims 1 to 16 **characterised by**
at least one storage device (95) for recording at least one working result (52, 53, 54, 71, 72), which is connected to at least one control device (98) for ascertaining at least one working result (52, 53, 54, 71, 72).

18. Apparatus according to claim 17 **characterised in that** the storage device (95) is connected to the working assembly (6, 8, 10, 11, 24) for ascertaining at least one adjustment parameter of at least one working assembly (6, 8, 10, 11, 24) by suitable means (18, 21, 25, 26, 31).

19. Apparatus according to at least one of claims 17 and 18 **characterised in that** the control device (98) is connected to further devices (14-23, 25, 25, 31) for ascertaining harvester-specific, crop material-specific and/or harvesting process-specific parameters.

20. Apparatus according to at least one of claims 17 to 19 **characterised in that** an agricultural harvester (1) includes at least one control device (98) which is connected to at least one sensor (14, 15, 16, 17, 19) for ascertaining a working result, at least one sensor (18, 21, 25, 26, 31) for detecting the setting of an assembly (6, 8, 10, 11, 24), at least one storage device (95) and an operating and/or display element (29, 30).

21. Apparatus according to at least one of claims 17 to 20 **characterised in that** the control device (98) is connected to at least one sensor for ascertaining the grain separation (90), the crop material composition, the yield amount (14), the specific weight of the crop material (15) and/or the tailings volume amount (91) in the agricultural harvester (1) and/or the crop losses (17, 19) and at least one sensor for detecting the travel speed (23), the cleaning blower rotary speed (25), the respective sieve opening width (18, 16), the threshing drum rotary speed (31), the intake drum or chain deflection (20) and/or the threshing gap width (21).

22. Apparatus according to at least one of claims 17 to 21 **characterised in that** a first sensor (23) detects the travel speed of the harvester (1), a second sensor (20) detects the amount of straw in the inclined conveyor (3), a further sensor (31) detects the rotary speed of the threshing drum (6), a further sensor (21) detects the threshing gap, and a further sensor (17) detects the losses of the cleaning device (10, 11, 24), the individual sensor values are fed to a control device (98) and are monitored there, the control device (98) is connected to operating and display means (75, 29, 30, 50) for influencing the adjustment parameters and displaying the working results (52, 53, 54, 71, 72), includes at least one storage device (95) for recording at least one working result (52, 53, 54, 71, 72) and is connected to adjusting means for remotely controlled adjustment of the threshing drum rotary speed (100), the threshing gap width (101), at least one sieve opening width (103, 104) and/or the cleaning blower rotary speed (102).

## Revendications

1. Procédé de détermination d'un réglage adapté à un processus de récolte d'une machine agricole de récolte (1), avec au moins un organe de travail (6, 8, 10, 11, 24) exerçant une influence sur le résultat du travail de la machine agricole de récolte (1), au moins un paramètre de réglage de l'organe de travail (6, 8, 10, 11, 24) pouvant être modifié, **caractérisé en ce que**
- la machine agricole de récolte (1) est sollicitée lors de sa mise en oeuvre par une quantité de produit de récolte approximativement constante ;
- il est attendu qu'au moins un résultat de travail A1 soit approximativement constant et celui-ci est enregistré ;
- un paramètre de réglage d'un organe de travail réglable (6, 8, 10, 11, 24) est modifié et il est à nouveau attendu au moins un résultat de travail A2 de la machine agricole de récolte (1) approximativement constant dans le régime de travail ; et
- sur la base des résultats de travail A1, A2, un paramètre de réglage de l'organe de travail (6, 8, 10, 11, 24) est sélectionné pour aboutir à un meilleur résultat de travail A1, A2 de la machine agricole de récolte (1), et
- la sollicitation de la machine agricole de récolte (1) par une quantité approximativement constante de produit de récolte est déterminée par au moins un dispositif (20) et son respect est au moins affiché à l'attention de l'opérateur par des moyens adéquats (81, 82).

2. Procédé selon la revendication 1, **caractérisé en ce que** la valeur de consigne d'au moins un paramètre de réglage pour ledit au moins un organe de travail (6, 8, 10, 11, 24), afin de donner un premier résultat de travail A1 de la machine agricole de récolte (1), est stockée et peut être sélectionnée dans un dispositif de mémoire (95) en fonction d'au moins une caractéristique du produit de récolte et/ou d'au moins une grandeur spécifique du produit de récolte.

3. Procédé selon au moins l'une des revendications 1 et 2, **caractérisé en ce que** le paramètre de réglage modifié de l'organe de travail (6, 8, 10, 11, 24) est enregistré en liaison avec le résultat de travail (52, 53, 54, 71, 72).

4. Procédé selon au moins l'une des revendications 1 à 3, **caractérisé en ce que** la quantité de produit de récolte sollicitant la machine agricole de récolte (1) et/ou au moins un résultat de travail (52, 53, 54, 71, 72) de la machine agricole de récolte (1) est détecté par au moins un capteur (14, 15, 16, 17, 19, 20) et est affiché à l'attention de l'opérateur de la machine agricole de récolte (1) afin qu'il le surveille.

5. Procédé selon au moins l'une des revendications 1 à 4, **caractérisé en ce que** l'existence d'un résultat de travail approximativement constant de la machine agricole de récolte (1), pour au moins un résultat de travail (51, 52, 53, 71, 72), est déterminée par un dispositif de commande (98) et son respect est affiché au moins à l'opérateur par des moyens adéquats (55, 56).

6. Procédé selon au moins l'une des revendications 1 à 5, **caractérisé en ce que** dans le dispositif considéré, la sollicitation de la machine agricole de récolte (1) par une quantité approximativement constante de produit de récolte et/ou l'existence d'au moins un résultat de travail approximativement constant (52, 53, 54, 71, 72) sont déterminés sur la base d'une zone de tolérance prédéterminée et d'une plage de temps prédéterminée.

7. Procédé selon au moins l'une des revendications 1 à 6, **caractérisé en ce que** le dispositif qui, après la constatation et l'enregistrement d'un premier résultat de travail A1 de la machine agricole de récolte (1), modifie automatiquement au moins un paramètre de réglage de l'organe de travail (6, 8, 10, 11, 24) à régler, attend à nouveau un résultat de travail approximativement constant et enregistre le nouveau résultat de travail A2 qui s'établit, pour constituer un autre résultat de travail.

8. Procédé selon la revendication 7, **caractérisé en ce que** le paramètre de réglage est modifié automatiquement dans le sens d'un nombre, d'une grandeur et d'une direction prédéterminés en fonction de l'organe de travail (6, 8, 10, 11, 24) à régler.

9. Procédé selon au moins l'une des revendications 1 à 8, **caractérisé en ce que** le meilleur paramètre de réglage pour l'organe de travail (6, 8, 10, 11, 24) est sélectionné automatiquement sur la base des résultats de travail (52, 53, 54, 71, 72) enregistrés.

10. Procédé selon au moins l'une des revendications 1 à 9, **caractérisé en ce que** les résultats de travail (52, 53, 54, 71, 72) sont analysés sur la base d'au moins un critère déterminé par la nature du produit de récolte (51) et/ou au moins un objectif de consigne, le meilleur résultat de travail A1, A2 de la machine agricole de récolte en est dérivé en conséquence et ledit au moins un paramètre de réglage pour un organe de travail (6, 8, 10, 11, 24) est déterminé sur cette base.

11. Procédé selon au moins l'une des revendications 1 à 10, **caractérisé en ce que**, à partir des résultats de travail (52, 53, 54, 71, 72) enregistrés, une relation est déterminée entre les différents paramètres de réglage E1, E2, E3 modifiés et les différentes résultats de travail (52, 53, 54, 71, 72) correspondants et un paramètre de réglage conduisant, grâce à cette relation, au meilleur résultat de travail est déterminé ou sélectionné à l'aide de cette relation.

12. Procédé selon au moins l'une des revendications 1 à 11, **caractérisé en ce que** plusieurs paramètres de réglage d'un organe de travail réglable (6, 8, 10, 11, 24) sont modifiés simultanément et il est de nouveau attendu un résultat de travail A1, A2 de la machine agricole de récolte (1) approximativement constant dans le régime de travail.

13. Procédé selon au moins l'une des revendications 1 à 12, **caractérisé en ce que** la détermination d'un meilleur réglage d'au moins un organe de travail réglable (6, 8, 10, 11, 24) est commandée automatiquement et le meilleur paramètre de réglage déterminé est indiqué à l'opérateur de la machine agricole de récolte (1) et/ou l'organe de travail (6, 8, 10, 11, 24) est réglé automatiquement à l'aide de ce paramètre de réglage.

14. Procédé selon au moins l'une des revendications 1 à 13, **caractérisé en ce que** plusieurs paramètres de réglage d'un organe de travail (6, 8, 10, 11, 24) et/ou les paramètres de réglage de plusieurs organes de travail (6, 8, 10, 11, 24) sont déterminés successivement dans un ordre déterminé, un résultat de travail (52, 53, 54, 71, 72) approximativement constant de la machine agricole de récolte (1) étant attendu dans le régime de travail avant la détermination de chacun des nouveaux paramètres de réglage.

15. Procédé selon au moins l'une des revendications 1 à 14, **caractérisé en ce que**
- l'opérateur d'une moissonneuse-batteuse (1) sollicite la moissonneuse-batteuse (1), lors de sa mise en oeuvre, par une quantité de produit de récolte approximativement constante en respectant au moins une hauteur et une largeur de coupe constantes de l'appareil porté (2) et une vitesse de récolte constante de la moissonneuse-batteuse (1) ;
- l'opérateur, au moins sur la base d'un affichage d'un résultat de travail, tel que les signaux de pertes (71, 72) et/ou le volume des retours d'ôtons (54) et/ou la quantité de grain dans les retours d'ôtons et/ou le poids spécifique du produit de récolte (52) et/ou la quantité de produit de récolte (53), attend un résultat de travail approximativement constant et l'enregistre ;
- l'opérateur modifie un paramètre de réglage, tel que la largeur de maille du contre-batteur ou la vitesse de rotation du tambour de battage de l'organe de battage (6, 8) et attend une fois encore au moins un résultat de travail (52, 53, 54, 71, 72) de la moissonneuse-batteuse (1) approximativement constant dans le régime de travail ; et
- l'opérateur, sur la base d'au moins un des résultats de travail (52, 53, 54, 71, 72), sélectionne la largeur de maille du contre-batteur et/ou la vitesse de rotation du tambour de battage pour l'organe de battage (6, 8) qui ont conduit au poids spécifique le plus élevé du produit de récolte et/ou à la quantité maximale de récolte dans la moissonneuse-batteuse (1).

16. Procédé selon au moins l'une des revendications 1 à 15, **caractérisé en ce que**
- l'opérateur d'une moissonneuse-batteuse (1) sollicite la moissonneuse-batteuse (1), lors de sa mise en oeuvre, par une quantité de produit de récolte approximativement constante en respectant au moins une hauteur et une largeur de coupe constantes de l'appareil porté (2) et une vitesse de récolte constante de la moissonneuse-batteuse (1) ;
- l'opérateur, au moins sur la base d'un affichage d'un résultat de travail, tel que les signaux de pertes (71, 72) et/ou le volume des retours d'ôtons (54) et/ou la quantité de grain dans les retours d'ôtons et/ou le poids spécifique du produit de récolte (52) et/ou la quantité de produit de récolte(53), attend un résultat de travail approximativement constant et l'enregistre ;
- l'opérateur modifie un paramètre de réglage, tel que la vitesse de rotation de la soufflante (24) ou l'ouverture de maille du tamis inférieur ou supérieur (10, 11) du dispositif de nettoyage (10, 11, 24) et attend une fois encore au moins un résultat de travail (52, 53, 54, 71, 72) de la moissonneuse-batteuse (1) approximativement constant dans le régime de travail ; et
- l'opérateur, sur la base d'au moins un des résultats de travail (52, 53, 54, 71, 72), sélectionne une vitesse de rotation de la soufflante (24) ou une ouverture de maille des tamis inférieur ou supérieur (10, 11) qui ont conduit à la quantité de retours d'ôtons la plus faible tout en respectant une limite des signaux de pertes (57) et/ou de la quantité de grain dans les retours d'ôtons de la moissonneuse-batteuse (1).

17. Dispositif destiné à mettre en oeuvre un procédé selon au moins l'une des revendications 1 à 16, **caractérisé par** au moins un dispositif de mémoire (95) destiné à l'enregistrement d'au moins un résultat de travail (52, 53, 54, 71, 72) et relié au moins à un dispositif de commande (98) pour la détermination d'au moins un résultat de travail (52, 53, 54, 71, 72).

18. Dispositif selon la revendication 17, **caractérisé en ce que** le dispositif de mémoire (95), afin de déterminer au moins un paramètre de réglage d'au moins un organe de travail (6, 8, 10, 11, 24), est relié par un moyen adéquat (18, 21, 25, 26, 31) avec l'organe de travail (6, 8, 10, 11, 24).

19. Dispositif selon au moins l'une des revendications 17 ou 18, **caractérisé en ce que** le dispositif de commande (98) est relié à d'autres dispositifs (14 à 23, 25, 26, 31) afin de déterminer des paramètres spécifiques de la machine de récolte, spécifiques du produit de récolte et/ou spécifiques du processus de récolte.

20. Dispositif selon au moins l'une des revendications 17 à 19, **caractérisé en ce qu'**une machine agricole de récolte (1) comporte au moins un dispositif de commande (98) qui est relié à au moins un capteur (14, 15, 16, 17, 19) destiné à déterminer un résultat de travail, à au moins un capteur (18, 21, 25, 26, 31) destiné à déterminer le réglage d'un organe de travail (6, 8, 10, 11, 24), à au moins un dispositif de mémoire (95) et à un élément de manoeuvre et/ou d'affichage (29, 30).

21. Dispositif selon au moins l'une des revendications 17 à 20, **caractérisé en ce que** le dispositif de commande (98) est relié à au moins un capteur destiné à déterminer les rejets de grain (90), la composition du produit de récolte, le rendement (14), le poids spécifique du produit de récolte (15) et/ou le volume des retours d'ôtons (91) dans la machine agricole de récolte (1) et/ou les pertes de récolte (17, 19), ainsi qu'à au moins un capteur destiné à déterminer la vitesse de déplacement (23), la vitesse de rotation de la soufflante de nettoyage (25), l'ouverture de maille des tamis (18, 26), la vitesse de rotation des tambours de battage (31), la flèche du tambour et/ou de la chaîne d'introduction (20) et/ou l'écartement du contre-batteur (21).

22. Dispositif selon au moins l'une des revendications 17 à 21, **caractérisé en ce qu'**un premier capteur (23) détecte la vitesse de déplacement de la machine agricole de récolte (1), un deuxième capteur (20) la quantité de paille dans le convoyeur oblique (3), un autre capteur (31) la vitesse de rotation du tambour de battage (6), un autre capteur (21) l'écartement du contre-batteur, un autre capteur (17) les pertes du dispositif de nettoyage (10, 11, 24), **en ce que** les différentes valeurs des capteurs sont envoyées à un dispositif de commande (98) et y sont surveillées et **en ce que** le dispositif de commande (98) est relié à des moyens de manoeuvre et d'affichage (75, 29, 30, 50) destinés à agir sur les paramètres de réglage et à afficher les résultats de travail (52, 53, 54, 71, 72), comporte au moins un dispositif de mémoire (95) destiné à l'enregistrement d'au moins un résultat de travail (52, 53, 54, 71, 72) et est relié à des moyens de positionnement pour le réglage télécommandé de la vitesse de rotation du tambour de battage (100), de l'écartement du contre-batteur (101), d'au moins une largeur de maille de tamis (103, 104) et/ou de la vitesse de rotation de la soufflante de nettoyage (102).
